# EUROPEAN PATENT APPLICATION

(11) **EP 4 145 809 A1**
(43) Date of publication of application: **08.03.2023**
(21) Application number: 21813426.0
(22) Date of filing: 25.03.2021
(51) Int. Cl.: H04M 1/02, H04M 1/725

(54) **DISPLAY CONTROL METHOD, ELECTRONIC DEVICE, AND COMPUTER-READABLE STORAGE MEDIUM**

(30) Priority: 29.05.2020 CN 202010479287
(71) Applicant: Huawei Technologies Co., Ltd., Shenzhen, Guangdong 518129 (CN)
(72) Inventor: YANG, Liuqing, Shenzhen, Guangdong 518129 (CN); QI, Yunfei, Shenzhen, Guangdong 518129 (CN); XIAO, Liang, Shenzhen, Guangdong 518129 (CN); YE, Fei, Shenzhen, Guangdong 518129 (CN); MAO, Yanyan, Shenzhen, Guangdong 518129 (CN)
(74) Representative: Thun, Clemens
(86) International application number: PCT/CN2021/082873
(87) International publication number: WO 2021/238370

(57) **Abstract**

This application provides a display control method, an electronic device, and a computer-readable storage medium. The method includes: displaying a multi-task interface if a first touch operation event entered by a user on a touchscreen of the electronic device is detected, where the first touch operation event is used to start the multi-task interface; and displaying a one-hand operation interface on the electronic device if a second touch operation event entered by the user on the touchscreen is detected in the multi-task interface. In this application, the one-hand operation interface can be started more conveniently and quickly, and a misoperation rate can be effectively reduced.

## Description

This application claims priority to Chinese Patent Application No. 202010479287.6, filed with the China National Intellectual Property Administration on May 29, 2020 and entitled "DISPLAY CONTROL METHOD, ELECTRONIC DEVICE, AND COMPUTER-READABLE STORAGE MEDIUM", which is incorporated in this application by reference in its entirety.

### TECHNICAL FIELD

This application relates to the field of electronic technologies, and in particular, to a display control method, an electronic device, and a computer-readable storage medium.

### BACKGROUND

With rapid development of smartphones, due to larger viewing angles and better detail display effects, large-screen smartphones are popular among more consumers.

However, in a plurality of application scenarios, a user can hold a smartphone with only one hand. When a screen of the smartphone reaches a specific size, an area in which the screen can be flexibly operated when the smartphone is held with one hand is very limited.

In the conventional technology, to resolve a problem that it is inconvenient to operate a screen when a large-screen smartphone is held with one hand, a one-hand operation interface is provided. In the interface, a screen window of the smartphone is scaled down or moved to an area that can be touched by one hand. However, in this technology, when the one-hand operation interface is started, operation efficiency is relatively low, and a misoperation rate is relatively high.

### SUMMARY

This application discloses a display control method, an electronic device, and a computer-readable storage medium, so that a one-hand operation interface can be started more conveniently and quickly, and a misoperation rate can be effectively reduced.

According to a first aspect, an embodiment of this application provides a display control method, applied to an electronic device. The method includes: displaying a multi-task interface if a first touch operation event entered by a user on a touchscreen of the electronic device is detected; and displaying a one-hand operation interface on the electronic device if a second touch operation event entered by the user on the touchscreen is detected in the multi-task interface.

In this embodiment of this application, after the first touch operation event entered by the user on the touchscreen of the electronic device 100 is detected, the multi-task interface is displayed, and if it is detected, in the multi-task interface, that the second touch operation event entered by the user on the touchscreen of the electronic device 100, the one-hand operation interface is displayed on the electronic device, so that the one-hand operation interface can be started more conveniently and quickly, and a misoperation rate can be effectively reduced.

The first touch operation event is used to start the multi-task interface. When the electronic device detects the first touch operation event entered by the user on the touchscreen, the multi-task interface is displayed on the electronic device. The second touch operation event is used to start the one-hand operation interface in the multi-task interface. The one-hand operation interface is displayed on the electronic device if the electronic device detects, in the multi-task interface, the second touch operation event entered by the user on the touchscreen.

The first touch operation event and the second touch operation event are different touch operation events, and the difference may be reflected in time or space. For example, a sliding operation detected at a time point is a first touch operation event, and a sliding operation detected at another time point is a second touch operation event. For example, a sliding operation corresponding to a sliding track is a first touch operation event, and a sliding operation corresponding to another sliding track is a second touch operation event.

It should be noted that the second touch operation event in this embodiment of this application is a touch operation performed after the first touch operation event occurs and when a finger of the user does not leave the touchscreen of the electronic device.

For example, the first touch operation event or the second touch operation event may be a sliding operation, including but not limited to sliding left, sliding right, sliding up, and sliding down. Sliding left indicates that a sliding end point is relatively located on a left side of a sliding start point after a sliding operation ends, sliding right indicates that a sliding end point is relatively located on a right side of a sliding start point after a sliding operation ends, sliding up indicates that a sliding end point is relatively located on a upper side of a sliding start point after a sliding operation ends, and sliding down indicates that a sliding end point is relatively located on a lower side of a sliding start point after a sliding operation ends.

With reference to the first aspect, in a first possible implementation of the first aspect, the second touch operation event includes a sliding direction. Correspondingly, the displaying a one-hand operation interface on the electronic device if a second touch operation event entered by the user on the touchscreen is detected in the multi-task interface includes: displaying the one-hand operation interface on the electronic device if it is detected, in the multi-task interface, that the sliding direction entered by the user on the touchscreen is a predetermined direction.

For example, the one-hand operation interface includes a first screen window interface and a second screen window interface. The first screen window interface may be an interface obtained after a current operation interface is scaled down based on a first predetermined proportion, and the first screen window interface includes all interface elements in the current operation interface. The second screen window is an interface that displays a predetermined part of the interface elements in the current operation interface. For example, the predetermined part of the interface elements may be an interface element at an upper half of the current operation interface, or may be an interface element at a lower half of the current operation interface, or may be interface elements in a first row and a second row in the current operation interface.

For example, the sliding direction in this embodiment of this application is the predetermined direction, including sliding left, sliding right, and sliding down. In this embodiment of this application, whether the displayed one-hand operation interface is the first screen window interface or the second screen window interface is determined based on different sliding directions, so that the one-hand operation interface is displayed in an area in which the user can easily operate the screen, to improve use experience of the user.

With reference to the first aspect, in a second possible implementation of the first aspect, the displaying a one-hand operation interface on the electronic device if a second touch operation event entered by the user on the touchscreen is detected includes: displaying the first screen window interface on the electronic device if it is detected, in the multi-task interface, that the sliding direction entered by the user on the touchscreen is left or right; and displaying the second screen window interface on the electronic device if it is detected, in the multi-task interface, that the sliding direction entered by the user on the touchscreen is down.

For example, the displaying the first screen window interface on the electronic device if it is detected, in the multi-task interface, that the sliding direction entered by the user on the touchscreen is left or right includes: displaying the first screen window interface in a lower left corner of the touchscreen if it is detected, in the multi-task interface, that the sliding direction entered by the user on the touchscreen is left; or displaying the first screen window interface in a lower light corner of the touchscreen if it is detected, in the multi-task interface, that the sliding direction entered by the user on the touchscreen is right.

For example, the displaying the second screen window interface on the electronic device if it is detected, in the multi-task interface, that the sliding direction entered by the user on the touchscreen is down includes: displaying the second screen window interface at a lower half of the touchscreen if it is detected, in the multi-task interface, that the sliding direction entered by the user on the touchscreen is down.

It may be understood that, when the user holds the electronic device with one hand and performs a one-hand operation, a habitual gesture of the user is related to a hand holding the electronic device. For example, when the user holds the electronic device with a left hand and performs a one-hand operation, sliding left is more convenient than sliding right. However, when the user holds the electronic device with a right hand and performs a one-hand operation, sliding right is more convenient than sliding left. To make the one-hand operation interface displayed on the electronic device convenient for the user to perform an operation, in this embodiment of this application, based on different sliding directions, the first screen window interface or the second screen window interface is displayed at different locations of the touchscreen, to improve use experience of the user.

With reference to the first aspect, in a third possible implementation of the first aspect, the displaying the one-hand operation interface on the electronic device if it is detected, in the multi-task interface, that the sliding direction entered by the user on the touchscreen is a predetermined direction includes: displaying the one-hand operation interface on the electronic device if it is detected, in the multi-task interface, that the sliding direction entered by the user on the touchscreen is the predetermined direction and sliding reaches a predetermined area.

The predetermined area may be a left screen edge or a right screen edge of the touchscreen of the electronic device 100, or may be a specified area within a range of a bottom screen area of the touchscreen of the electronic device.

The first touch operation event includes a sliding distance. Before the multi-task interface is displayed, a current operation interface is gradually scaled down as the sliding distance increases. The sliding distance is a vertical distance of a current pressing point that is in the first touch operation event and that is relative to a screen bottom of the touchscreen.

An operation object corresponding to the first touch operation event is the current operation interface, and an operation object corresponding to the second touch operation event is an interface in which the current operation interface is scaled down based on a second predetermined proportion.

For example, in a process in which the first touch operation event occurs, when the sliding distance gradually increases, the operation object corresponding to the first touch operation event gradually scales down the second predetermined proportion. When the sliding distance increases and then gradually decreases, the operation object corresponding to the first touch operation event is gradually scaled up based on the second predetermined proportion, so that in the process in which the touch operation event occurs, visual staying in an intermediate process is formed. Therefore, the user can truly experience a "sliding" effect. In other words, the current operation interface generates a window following effect as the sliding distance changes, that is, a gesture of the user changes.

With reference to the first aspect, in a fourth possible implementation of the first aspect, the displaying a one-hand operation interface on the electronic device if a second touch operation event entered by the user on the touchscreen is detected includes: if the second touch operation event entered by the user on the touchscreen is detected, moving, by using a preset acceleration, an operation object corresponding to the second touch operation event, and converting the operation object into the one-hand operation interface for display after the operation object is moved to a preset location.

It should be noted that, after the second touch operation event is completed, that is, when the finger of the user leaves the touchscreen and no longer acts on the operation object corresponding to the second touch operation event, to reduce a visual impact problem caused to the user because the operation object corresponding to the second touch operation event is instantaneously scaled down or moved to the first screen window interface or the second screen window interface is instantaneously moved for display, and to improve visual experience of the user, in this embodiment of this application, when the second touch operation event entered by the user on the touchscreen is detected, the operation object corresponding to the second touch operation event is moved at the preset acceleration, and after being moved to the predetermined location, the operation object is converted into the one-hand operation interface for display, so that visual experience of the user can be effectively improved.

For example, the moving, by using a preset acceleration, an operation object corresponding to the second touch operation event includes: comparing a window size of the operation object corresponding to the second touch operation event with a window size of the one-hand operation interface; if the window size of the operation object corresponding to the second touch operation event is less than or greater than the window size of the one-hand operation interface, determining, based on a ratio of the window size of the operation object corresponding to the second touch operation event to the window size of the one-hand operation interface, a proportion for adjusting the window size of the operation object corresponding to the second touch operation event; and adjusting, based on the determined proportion, the window size of the operation object corresponding to the second touch operation event, so that the window size of the operation object corresponding to the second touch operation event is consistent with the window size of the one-hand operation interface, to improve visual experience of the user.

According to a second aspect, this application provides an electronic device, including one or more processors, a memory, and a display. The memory and the display are coupled to the one or more processors, the memory is configured to store computer program code, and the computer program code includes computer instructions. When the one or more processors execute the computer instructions, the electronic device is enabled to perform the method according to any one of the first aspect, the second aspect, the third aspect, the fourth aspect, the possible implementations of the first aspect, the possible implementations of the second aspect, the possible implementations of the third aspect, or the possible implementations of the fourth aspect.

According to a third aspect, this application provides a computer storage medium, including instructions. When the instructions are run on an electronic device, the electronic device is enabled to perform the method according to any one of the first aspect, the second aspect, or the possible implementations of the first aspect.

According to a fourth aspect, an embodiment of this application provides a computer program product. When the computer program product runs on a computer, the computer is enabled to perform the method according to any one of the first aspect, the second aspect, or the possible implementations of the first aspect.

According to a fifth aspect, an embodiment of this application provides a chip system, including a memory and a processor. When the chip system runs, an electronic device is enabled to perform the method according to any one of the first aspect, the second aspect, or the possible implementations of the first aspect. The chip system may be a single chip or a chip module including a plurality of chips.

It may be understood that the electronic device according to the second aspect, the computer storage medium according to the third aspect, or the computer program product according to the fourth aspect are all configured to perform the method according to any one of the first aspect and the second aspect. Therefore, for beneficial effects that can be achieved, refer to beneficial effects in a corresponding method. Details are not described herein again.

### BRIEF DESCRIPTION OF DRAWINGS

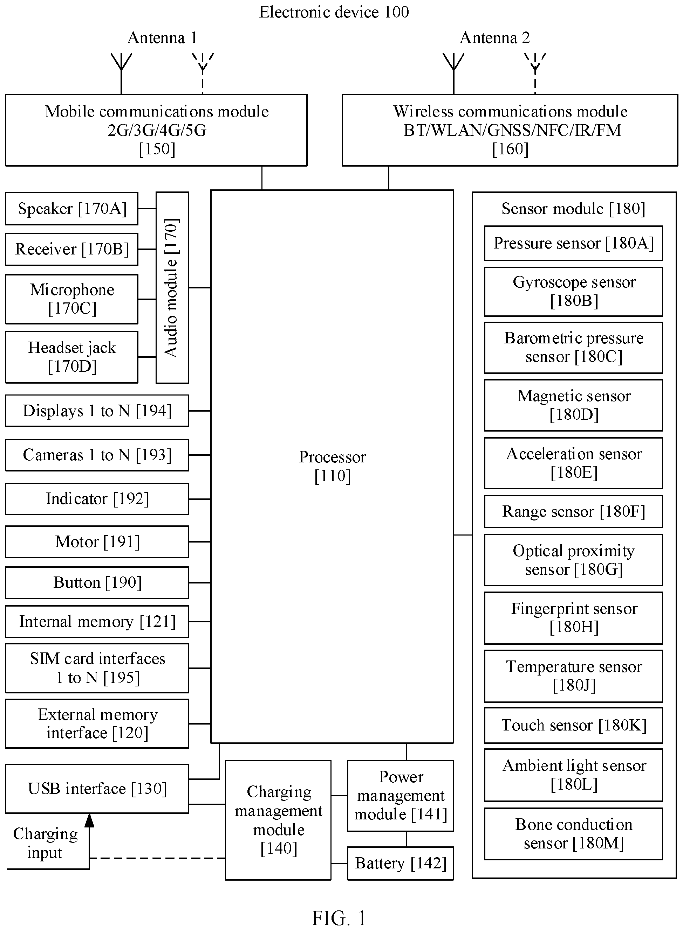

FIG. 1 is a schematic diagram of a structure of an electronic device 100 according to an embodiment of this application;

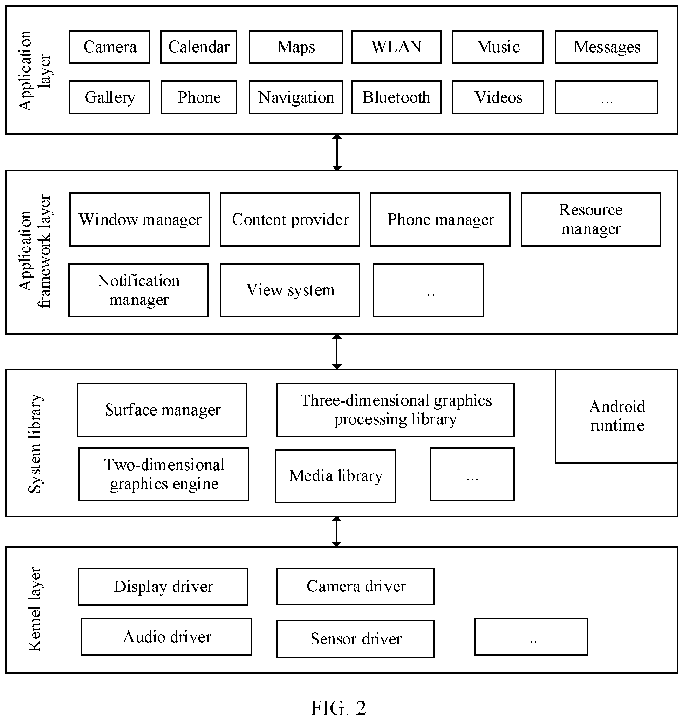

FIG. 2 is a block diagram of a software structure of an electronic device 100 according to an embodiment of this application;

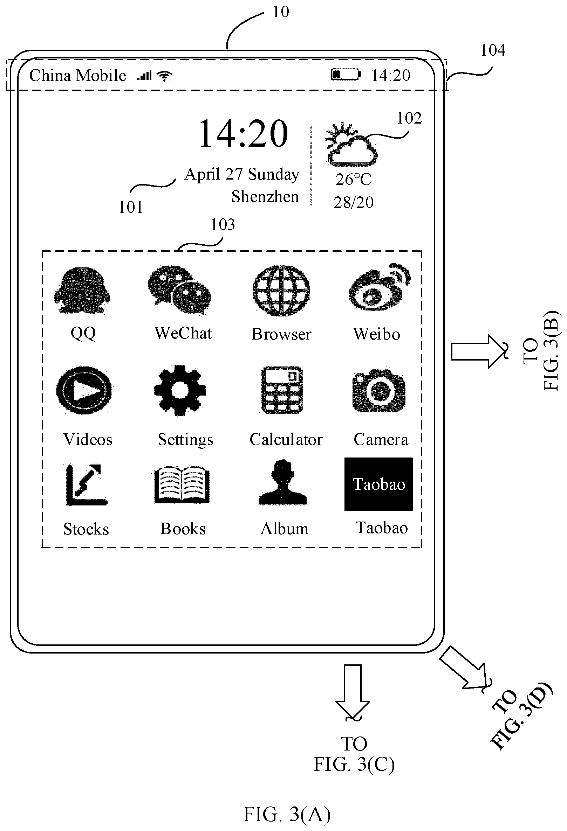

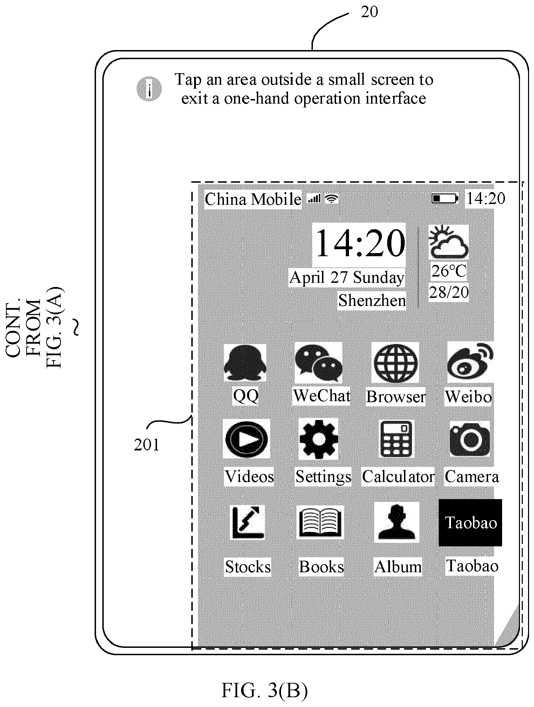

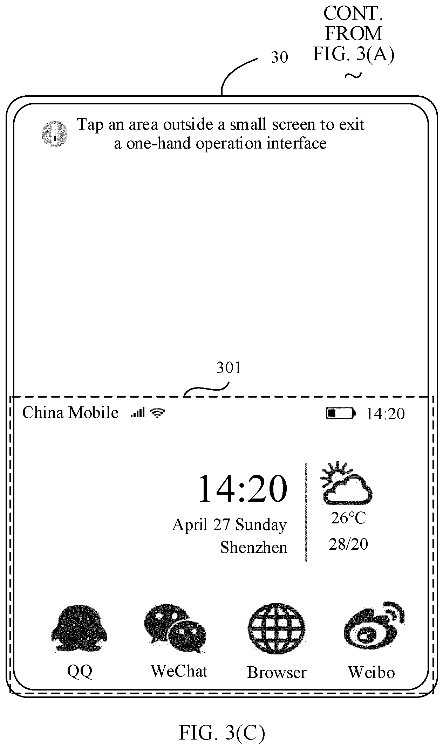

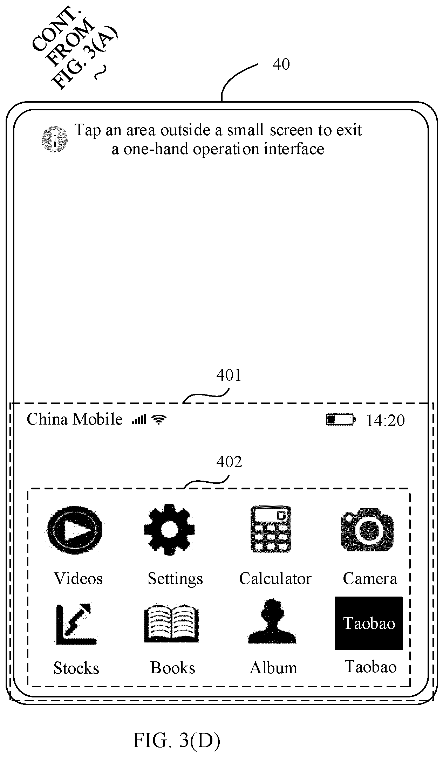

FIG. 3(A) to FIG. 3(D) are a schematic diagram of a user interface according to an embodiment of this application, where FIG. 3(A) is a schematic diagram of a home screen interface of an electronic device 100, FIG. 3(B) is a schematic diagram of a one-hand operation interface, FIG. 3(C) is a schematic diagram of another one-hand operation interface, and FIG. 3(D) is a schematic diagram of still another one-hand operation interface;

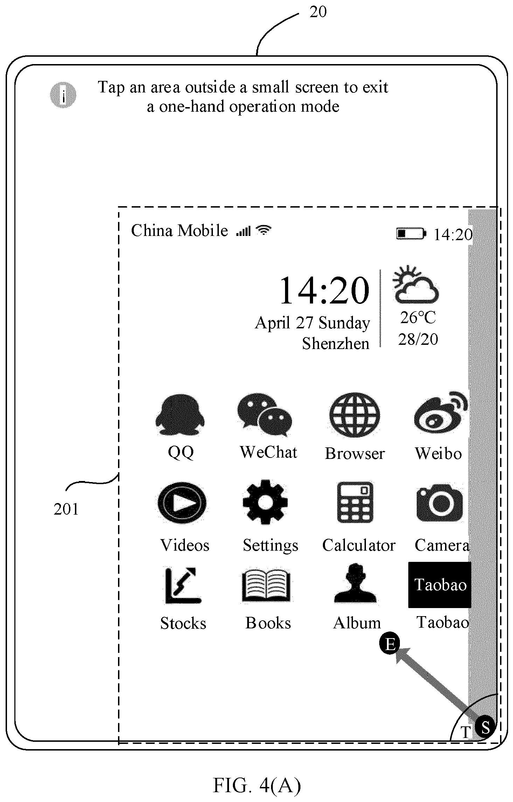

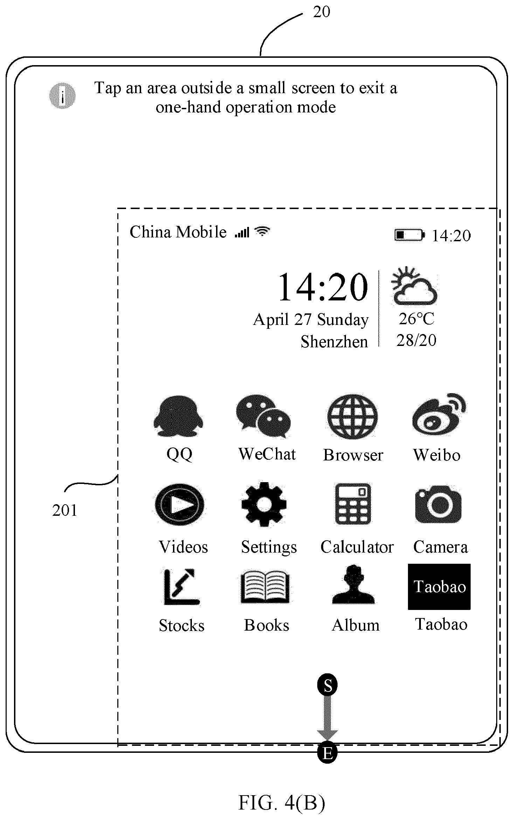

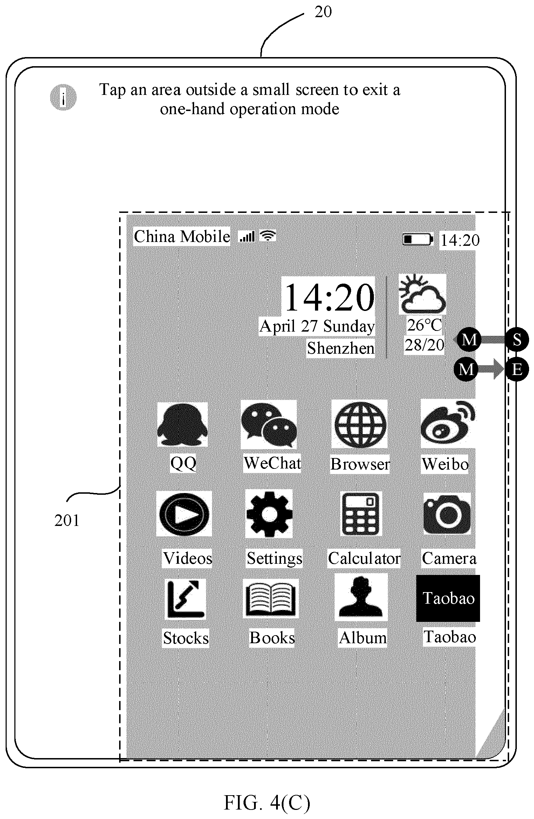

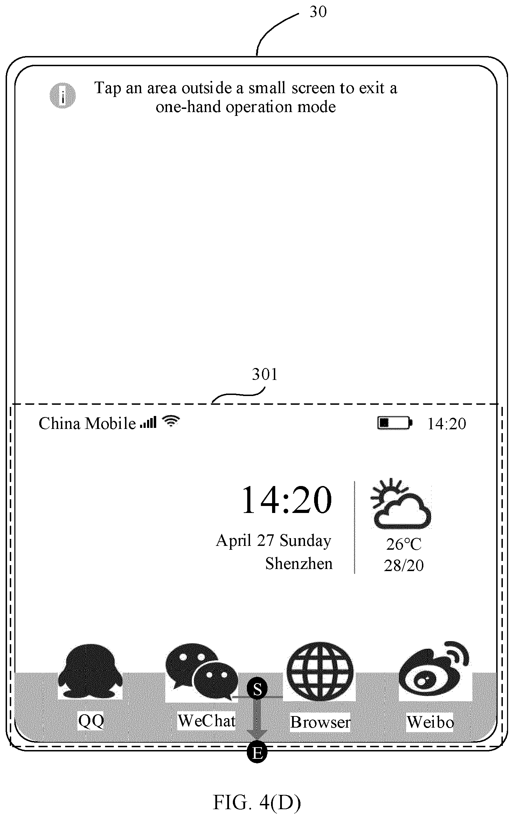

FIG. 4(A) to FIG. 4(D) are a schematic diagram of an application scenario according to an embodiment of this application, where FIG. 4(A) is a schematic diagram of an application scenario in which a one-hand operation interface is displayed after a finger of a user slides, on a screen inwardly, from a lower right corner edge location S at a screen bottom of a touchscreen to a location E in the screen, FIG. 4(B) is a schematic diagram of an application scenario in which a one-hand operation interface is displayed after the finger of the user slides down, on the screen outwardly, from any location S in a left half screen area at the screen bottom to a location E, FIG. 4(C) is a schematic diagram of an application scenario in which a one-hand operation interface is displayed after the finger of the user slides, on the screen inwardly, from any location S of a right screen edge of the touchscreen to a location M and then slides from the location M on the screen to any location E of the right screen edge of the touchscreen, and FIG. 4(D) is a schematic diagram of an application scenario in which a one-hand operation interface is displayed after the finger of the user slides down, on the screen outwardly, from any location S in a specified area at the screen bottom to a location E;

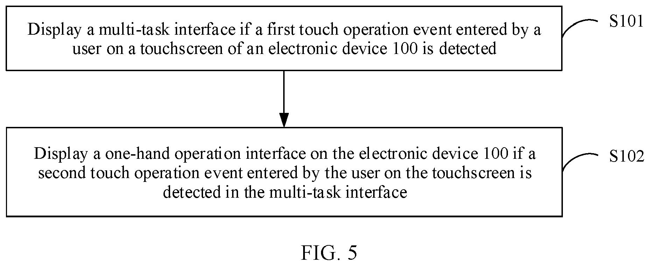

FIG. 5 is a schematic flowchart of a display control method according to an embodiment of this application;

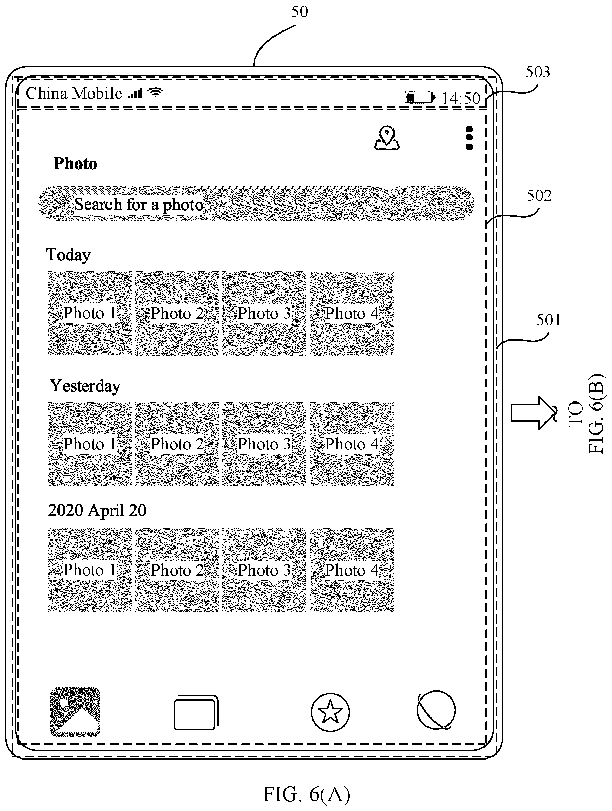

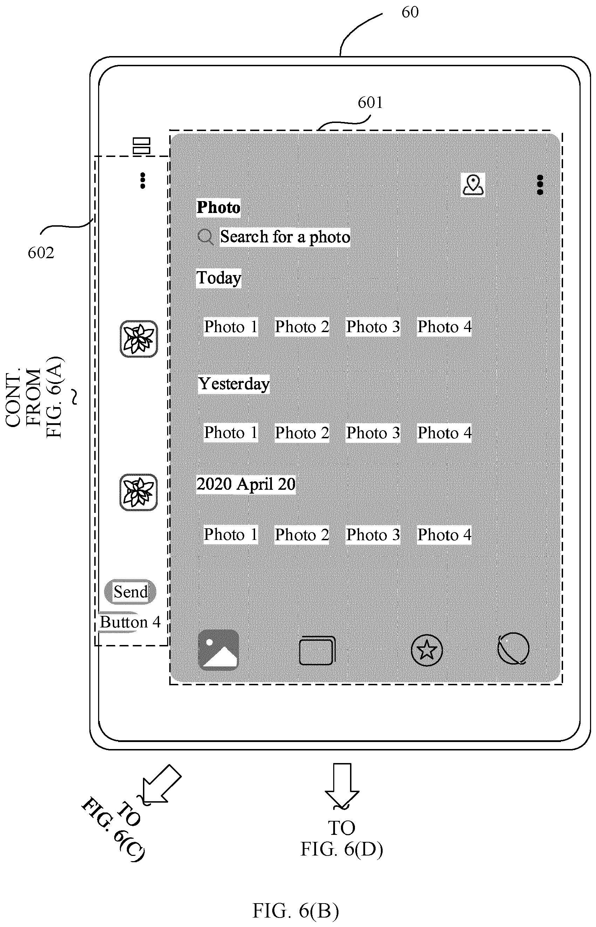

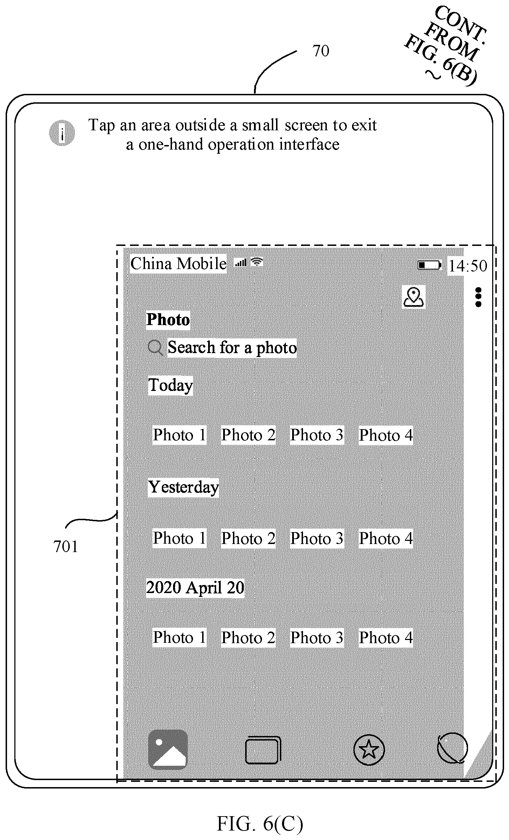

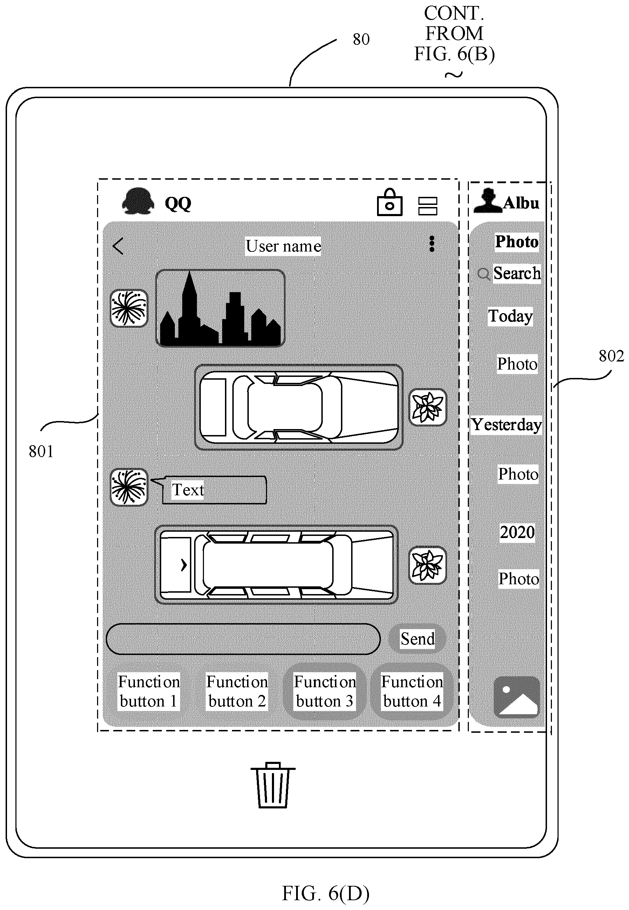

FIG. 6(A) to FIG. 6(D) are a schematic diagram of a user interface according to an embodiment of this application, where FIG. 6(A) is a schematic diagram of an application interface of Album installed in an electronic device 100, FIG. 6(B) is a schematic diagram of a multi-task interface, FIG. 6(C) is a schematic diagram of a one-hand operation interface, and FIG. 6(D) is a schematic diagram of another multi-task interface;

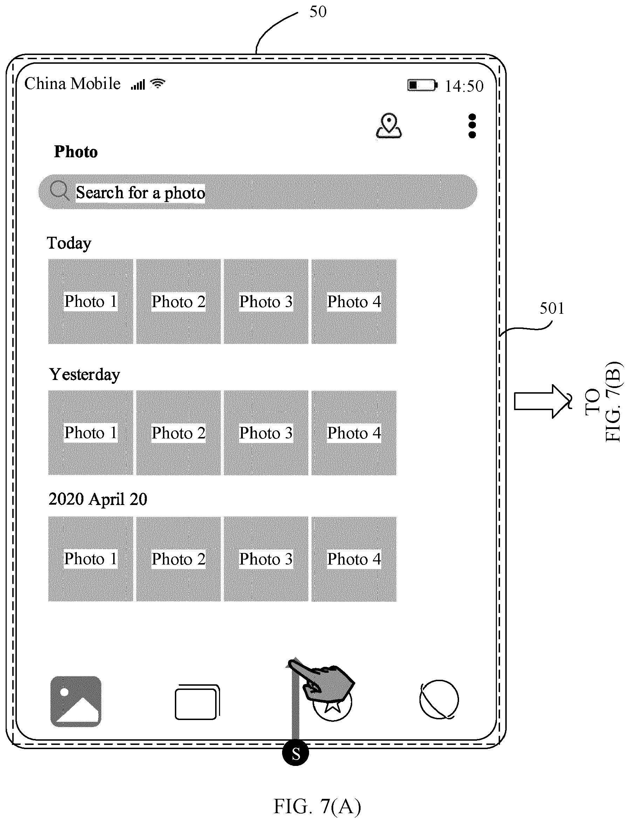

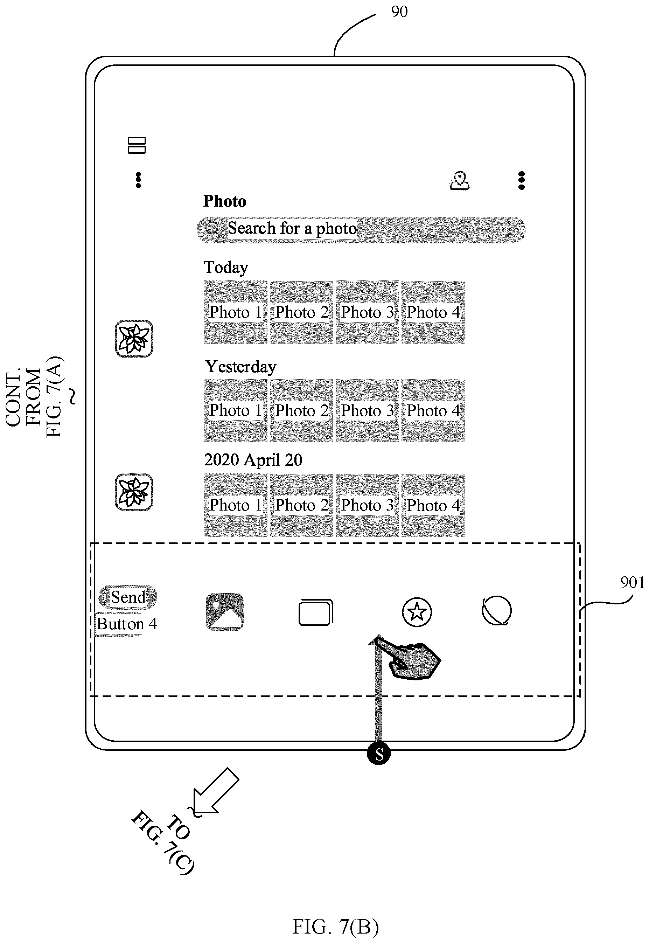

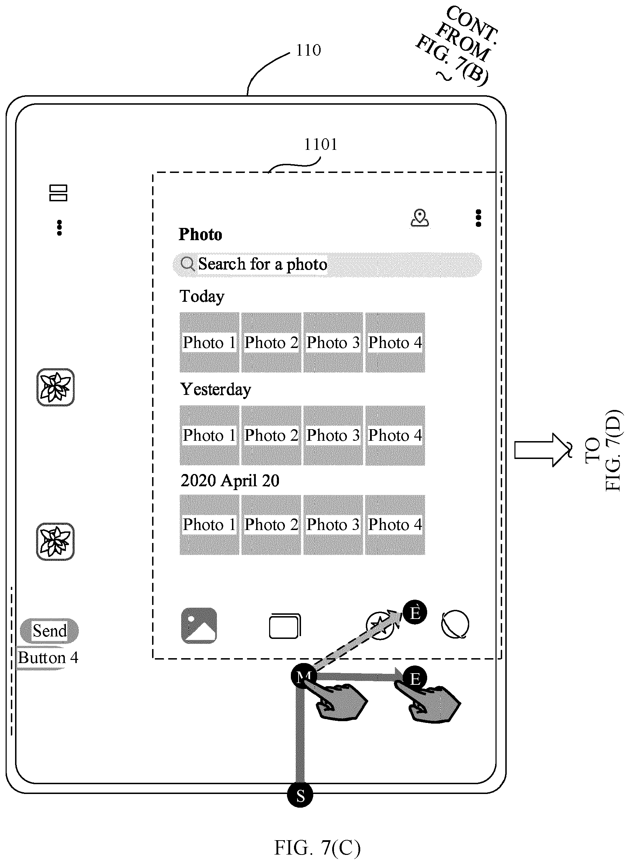

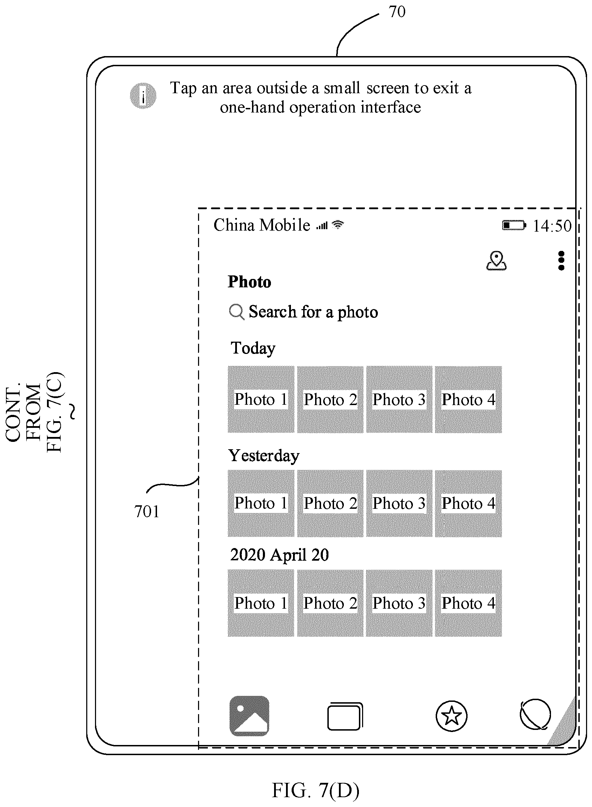

FIG. 7(A) to FIG. 7(D) are a schematic diagram of another application scenario according to an embodiment of this application, where FIG. 7(A) is a schematic diagram of an application scenario in which a finger of a user slides, on a screen inwardly, from a lower right corner edge location S at a bottom screen of a touchscreen to a location E in the screen, FIG. 7(B) is a schematic diagram of a multi-task interface displayed when the finger of the user slides to a specified area 901, FIG. 7(C) is a schematic diagram of a multi-task interface displayed when the finger of the user continues to slide right from a location M to any location between the location E and a location E' in the multi-task interface shown in FIG. (B), and FIG. 7(D) is a schematic diagram of a multi-task interface.

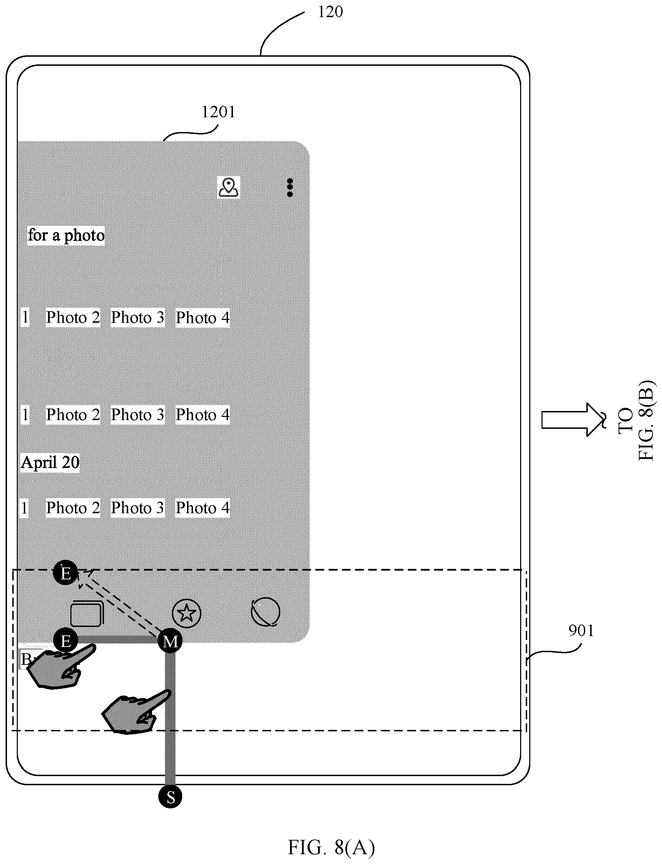

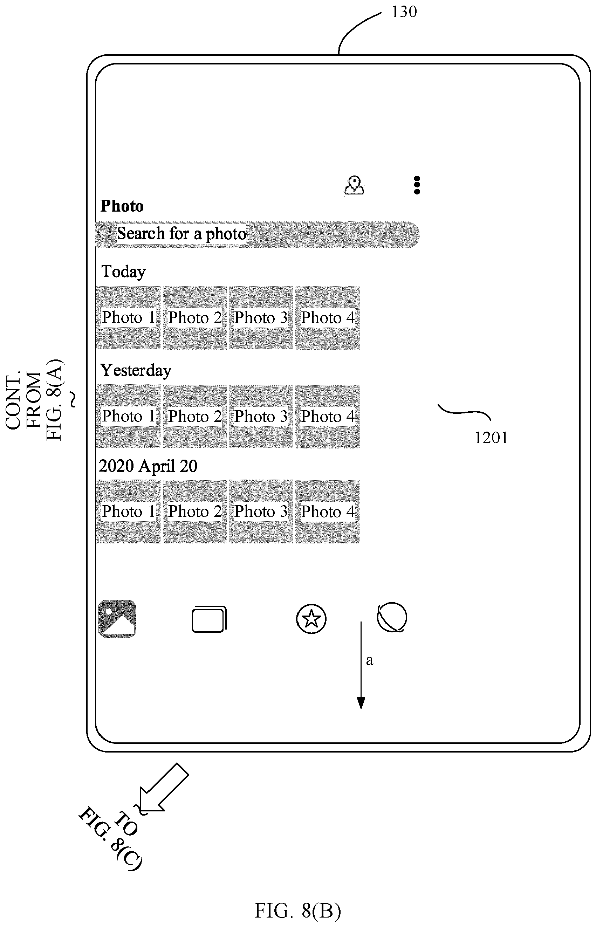

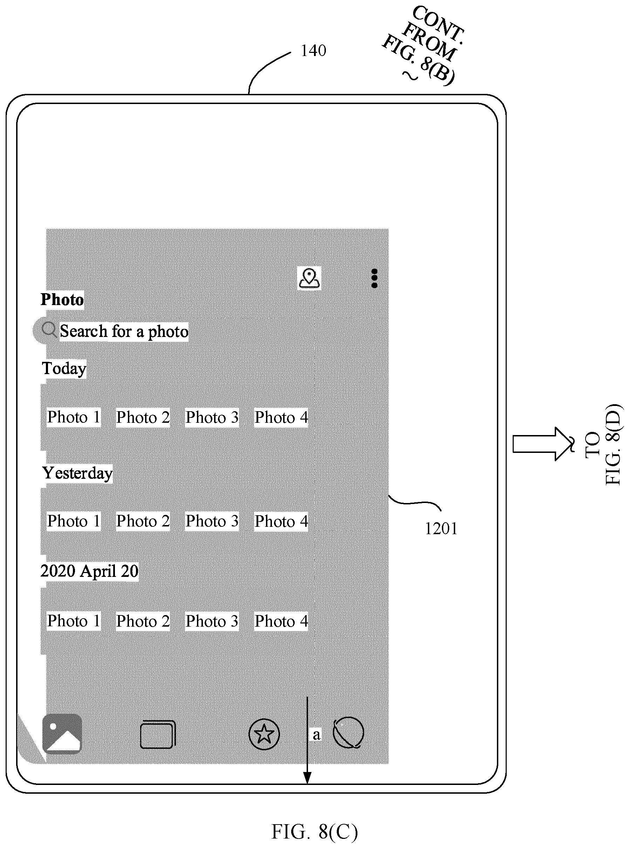

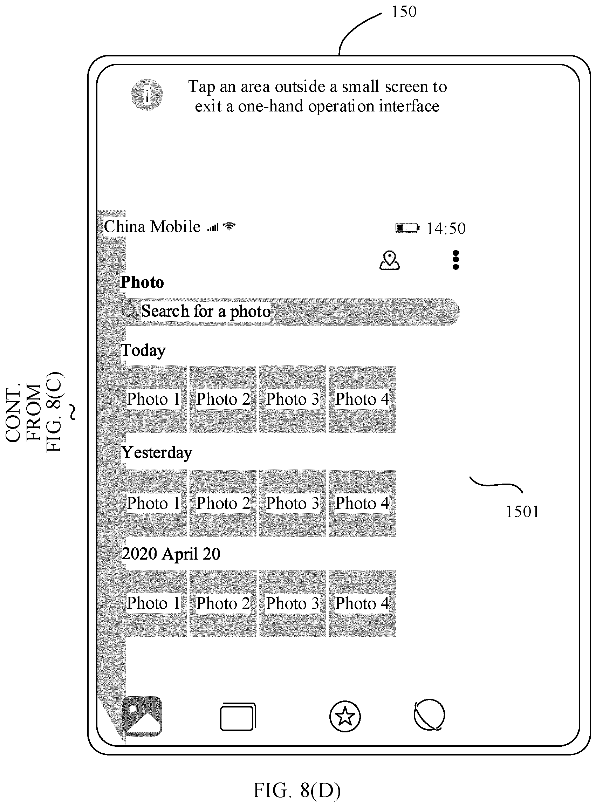

FIG. 8(A) to FIG. 8(D) are a schematic diagram of another user interface according to an embodiment of this application, where FIG. 8(A) is a schematic diagram of a multi-task interface, FIG. 8(B) and FIG. 8(C) are schematic diagrams of application interfaces in which an operation object corresponding to a second touch operation moves down at a preset acceleration a, and FIG. 8(D) is a schematic diagram of a one-hand operation interface displayed after the operation object corresponding to the second touch operation event moves to a predetermined location.

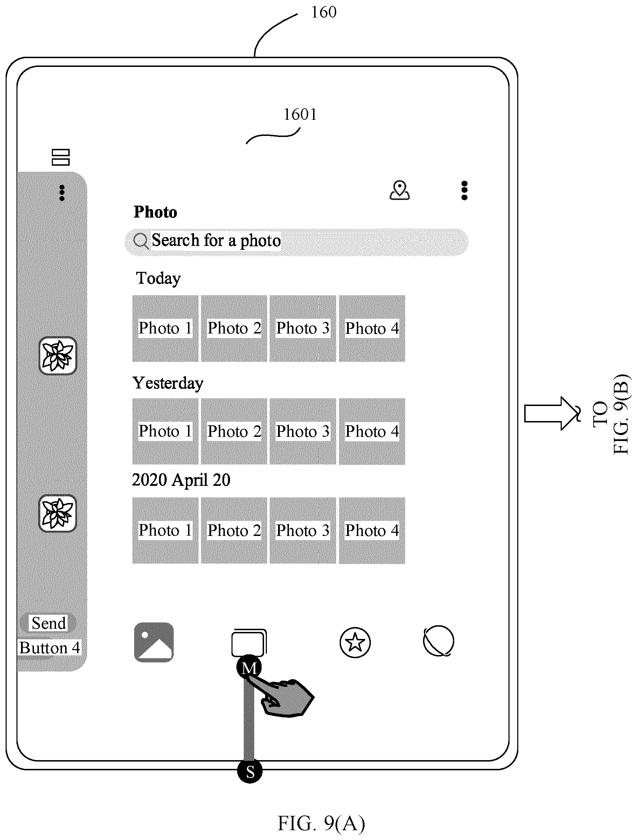

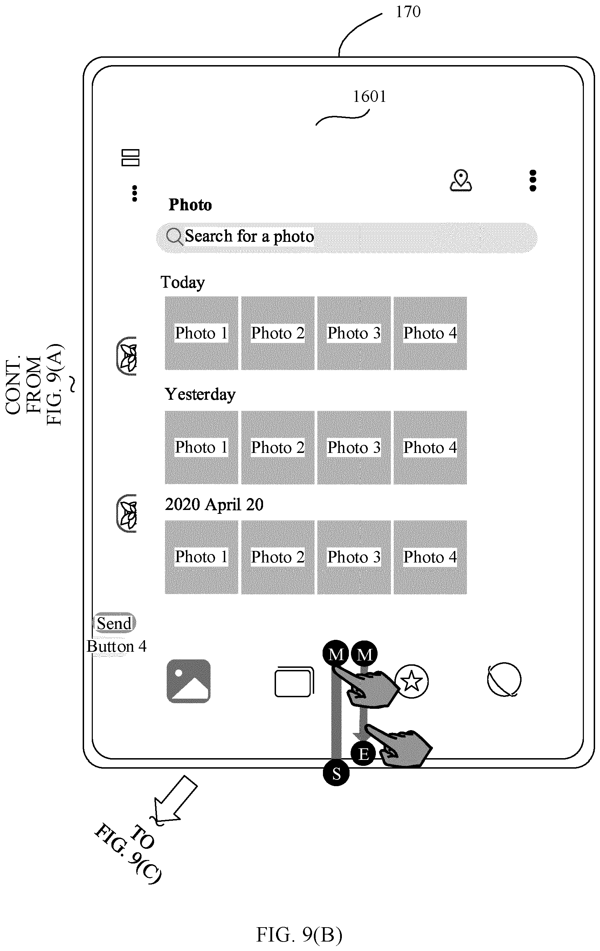

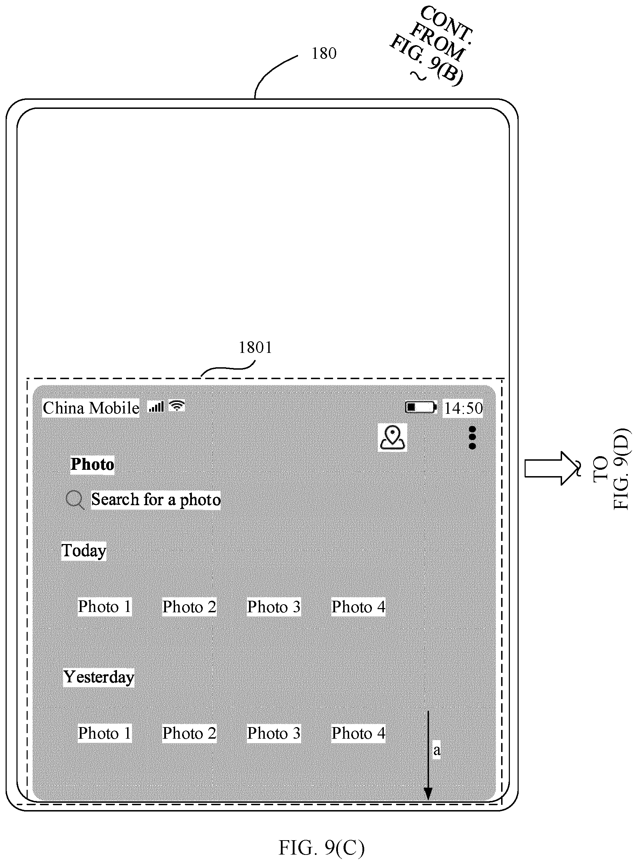

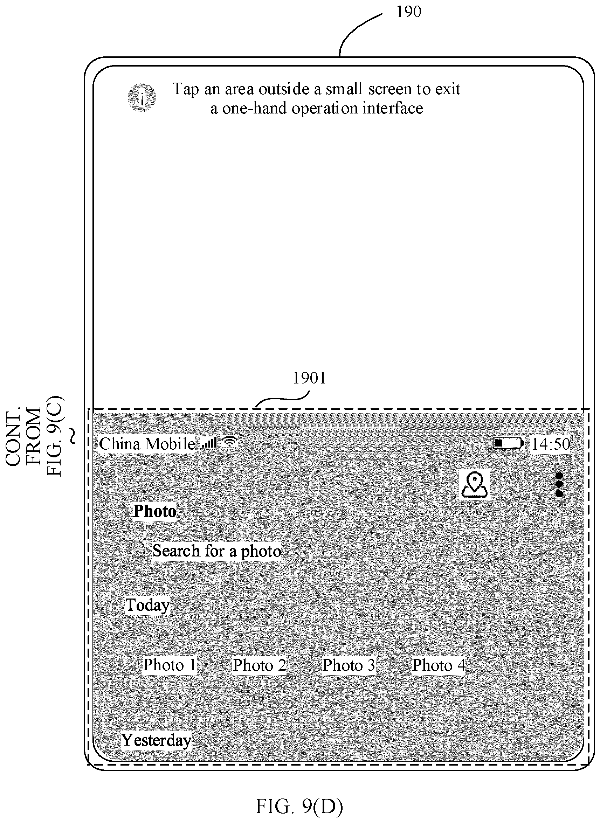

FIG. 9(A) to FIG. 9(D) are a schematic diagram of still another user interface according to an embodiment of this application, where FIG. 9(A) is a schematic diagram of a multi-task interface, FIG. 9(B) is a schematic diagram of another multi-task interface, FIG. 9(C) is a schematic diagram of an application interface of an album application in which an operation object corresponding to a second touch operation moves down at a preset acceleration a, and FIG. 9(D) is a schematic diagram of a one-hand operation interface displayed after the operation object corresponding to the second touch operation event moves to a predetermined location.

### DESCRIPTION OF EMBODIMENTS

The following describes embodiments of this application with reference to the accompanying drawings in embodiments of this application. Terms used in implementations of embodiments of this application are merely used to explain specific embodiments of this application, and are not intended to limit this application.

An electronic device in embodiments of this application is first described. Refer to FIG. 1. FIG. 1 is a schematic diagram of a structure of an electronic device 100 according to an embodiment of this application.

The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communications module 150, a wireless communications module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a range sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of the present invention does not constitute a specific limitation on the mobile device 100. In some other embodiments of this application, the mobile device 100 may include more or fewer components than those shown in the figure, or combine some components, or split some components, or have different component arrangements. The components shown in the figure may be implemented by using hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural network processing unit (neural network processing unit, NPU). Different processing units may be independent components, or may be integrated into one or more processors.

The controller may be a nerve center and a command center of the electronic device 100. The controller may generate an operation control signal based on instruction operation code and a time sequence signal, to control instruction fetching and instruction execution.

A memory may be further disposed in the processor 110, and is configured to store instructions and data. In some embodiments, the memory in the processor 110 is a cache. The memory may store instructions or data just used or cyclically used by the processor 110. If the processor 110 needs to use the instructions or the data again, the processor 110 may directly invoke the instructions or the data from the memory. This avoids repeated access and reduces a waiting time of the processor 110, thereby improving system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronous serial bus, including a serial data line (serial data line, SDA) and a serial clock line (serial clock line, SCL). In some embodiments, the processor 110 may include a plurality of groups of I2C buses. The processor 110 may be separately coupled to the touch sensor 180K, a charger, a flash light, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the electronic device 100.

The I2S interface may be configured to perform audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transmit an audio signal to the wireless communications module 160 through the I2S interface, to implement a function of answering a call by using a Bluetooth headset.

The PCM interface may also be configured to: perform audio communication, and sample, quantize, and code an analog signal. In some embodiments, the audio module 170 may be coupled to the wireless communications module 160 through the PCM bus interface. In some embodiments, the audio module 170 may alternatively transmit an audio signal to the wireless communications module 160 through the PCM interface, to implement a function of answering a call by using a Bluetooth headset. Both the I2S interface and the PCM interface may be configured to perform audio communication.

The UART interface is a universal serial data bus, and is configured to perform asynchronous communication. The bus may be a two-way communications bus. The bus converts to-be-transmitted data between serial communication and parallel communication. In some embodiments, the UART interface is usually configured to connect the processor 110 to the wireless communications module 160. For example, the processor 110 communicates with a Bluetooth module in the wireless communications module 160 through the UART interface, to implement a Bluetooth function. In some embodiments, the audio module 170 may transmit an audio signal to the wireless communications module 160 through the UART interface, to implement a function of playing music by using a Bluetooth headset.

The MIPI interface may be configured to connect the processor 110 to a peripheral component such as the display 194 or the camera 193. The MIPI interface includes a camera serial interface (camera serial interface, CSI), a display serial interface (display serial interface, DSI), and the like. In some embodiments, the processor 110 communicates with the camera 193 through the CSI interface, to implement a photographing function of the electronic device 100. The processor 110 communicates with the display 194 through the DSI interface, to implement a display function of the electronic device 100.

The GPIO interface may be configured by software. The GPIO interface may be configured as a control signal or a data signal. In some embodiments, the GPIO interface may be configured to connect the processor 110 to the camera 193, the display 194, the wireless communications module 160, the audio module 170, the sensor module 180, and the like. The GPIO interface may alternatively be configured as an I2C interface, an I2S interface, a UART interface, an MIPI interface, or the like.

The USB interface 130 is an interface that conforms to USB standard specifications, and may be specifically a mini USB interface, a micro USB interface, a USB Type-C interface, or the like. The USB interface 130 may be configured to connect to the charger to charge the electronic device 100, or may be configured to transmit data between the electronic device 100 and a peripheral device, or may be configured to connect to a headset to play audio by using the headset. The interface may be further configured to connect to another electronic device such as an AR device.

It may be understood that an interface connection relationship between the modules that is shown in this embodiment of the present invention is merely an example for description, and does not constitute a limitation on the structure of the electronic device 100. In some other embodiments of this application, the electronic device 100 may alternatively use an interface connection manner different from that in the foregoing embodiment, or may use a combination of a plurality of interface connection manners.

The charging management module 140 is configured to receive a charging input from the charger. The charger may be a wireless charger or a wired charger. In some embodiments of wired charging, the charging management module 140 may receive a charging input of a wired charger through the USB interface 130. In some embodiments of wireless charging, the charging management module 140 may receive a wireless charging input through a wireless charging coil of the electronic device 100. The charging management module 140 supplies power to the electronic device through the power management module 141 while charging the battery 142.

The power management module 141 is configured to connect the battery 142 and the charging management module 140 to the processor 110. The power management module 141 receives an input of the battery 142 and/or the charging management module 140, and supplies power to the processor 110, the internal memory 121, an external memory, the display 194, the camera 193, the wireless communications module 160, and the like. The power management module 141 may be further configured to monitor parameters such as a battery capacity, a battery cycle count, and a battery status of health (electric leakage and impedance). In some other embodiments, the power management module 141 may alternatively be disposed in the processor 110. In some other embodiments, the power management module 141 and the charging management module 140 may alternatively be disposed in a same device.

A wireless communication function of the electronic device 100 may be implemented through the antenna 1, the antenna 2, the mobile communications module 150, the wireless communications module 160, the modem processor, the baseband processor, and the like.

The antenna 1 and the antenna 2 are configured to transmit and receive electromagnetic wave signals. Each antenna in the electronic device 100 may be configured to cover one or more communications frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communications module 150 can provide a solution, applied to the electronic device 100, to wireless communication including 2G, 3G, 4G, 5G, and the like. The mobile communications module 150 may include at least one filter, a switch, a power amplifier, a low noise amplifier (low noise amplifier, LNA), and the like. The mobile communications module 150 may receive an electromagnetic wave through the antenna 1, perform processing such as filtering or amplification on the received electromagnetic wave, and transmit a processed electromagnetic wave to the modem processor for demodulation. The mobile communications module 150 may further amplify a signal modulated by the modem processor, and convert an amplified signal into an electromagnetic wave for radiation through the antenna 1. In some embodiments, at least some function modules in the mobile communications module 150 may be disposed in the processor 110. In some embodiments, at least some function modules in the mobile communications module 150 may be disposed in a same device as at least some modules in the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by using an audio device (which is not limited to the speaker 170A, the receiver 170B, or the like), or displays an image or a video by using the display 194. In some embodiments, the modem processor may be an independent component. In some other embodiments, the modem processor may be independent of the processor 110, and is disposed in a same device as the mobile communications module 150 or another function module.

The wireless communications module 160 may provide a solution, applied to the electronic device 100, to wireless communication including a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, and the like. The wireless communications module 160 may be one or more components integrating at least one communications processing module. The wireless communications module 160 receives an electromagnetic wave through the antenna 2, performs frequency modulation and filtering processing on the electromagnetic wave signal, and sends a processed signal to the processor 110. The wireless communications module 160 may further receive a to-be-sent signal from the processor 110, perform frequency modulation and amplification on the signal, and convert the signal into an electromagnetic wave for radiation through the antenna 2.

In some embodiments, in the electronic device 100, the antenna 1 and the mobile communications module 150 are coupled, and the antenna 2 and the wireless communications module 160 are coupled, so that the electronic device 100 can communicate with a network and another device by using a wireless communications technology. The wireless communications technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device 100 may implement a display function by using the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs that execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diode, QLED), or the like. In some embodiments, the electronic device 100 may include one or N displays 194, where N is a positive integer greater than 1.

In some embodiments, when the display panel is made of a material such as an OLED, an AMOLED, or an FLED, the display 194 shown in FIG. 1 may be bent. Herein, that the display 194 may be bent means that the display may be bent to any angle at any part and may be maintained at the angle. For example, the display 194 may be folded left and right from the middle, or may be folded up and down from the middle. In this embodiment of this application, the display that can be bent is referred to as a foldable display. The foldable display may be one screen, or may be a display formed by combining a plurality of screens. This is not limited herein.

In some embodiments, the electronic device 100 may determine, by using one or more of a gravity sensor, an acceleration sensor, or a gyroscope, whether the foldable display is in a folded form or an unfolded form, and may further determined whether the foldable display is in a portrait display state or a landscape display state. The electronic device 100 may further detect, by using the gravity sensor, the acceleration sensor, and the gyroscope, an included bending angle of the foldable display, and then the electronic device 100 may determine, based on the included bending angle, whether the foldable display is in the folded form or in the unfolded form. The electronic device 100 may further determine, by using one or more of the gravity sensor, the acceleration sensor, and the gyroscope, an orientation of the foldable display in the folded form, and further determine a display area of interface content output by a display system. For example, when a first screen area of the foldable display faces upward relative to the ground, the electronic device 100 may display, on the first screen area, the interface content output by the display system. For example, when a second screen area of the foldable display faces upward relative to the ground, the electronic device 100 may display, on the second screen area, the interface content output by the display system.

In some embodiments, the electronic device 100 may further include an angle sensor (not shown in FIG. 1). The angle sensor may be disposed at a bending part of the foldable display. The electronic device 100 may measure, by using the angle sensor (not shown in FIG. 1) disposed at the bending part of the foldable display, an included angle formed by two ends of the middle bending part of the foldable display. When the included angle is greater than or equal to a first angle, the electronic device 100 may identify, by using the angle sensor, that the foldable display enters the unfolded state. When the included angle is less than or equal to the first angle, the electronic device 100 may identify, by using the angle sensor, that the foldable display enters the folded form.

In some other embodiments, the electronic device 100 may also identify, by using a physical switch disposed at the bending part of the foldable display, whether the foldable display is in the folded form. For example, when the electronic device receives a folding operation performed by a user on the foldable display, the physical switch disposed on the electronic device is triggered to be turned on, and the electronic device 100 may determine that the foldable display is in the folded form. When the electronic device 100 receives an unfolding operation performed by the user on the foldable display, the physical switch disposed on the electronic device is triggered to be turned off, and the electronic device may determine that the foldable display is in the unfolded form. The example is merely used to explain this application, and shall not constitute a limitation.

The following uses an example in which the foldable display is two-fold display. When the foldable display is in the unfolded form, the foldable display may display content in full screen, or may display content in a partial area (for example, the first screen area or the second screen area), or may display content in two or more partial areas. In a possible implementation, when the foldable display displays interface content in full screen, the interface content may occupy a part of a display area of the foldable display. For example, when the display 194 is an abnormally cut screen (Notch screen), the interface content is displayed on a middle part of the abnormally cut screen. When a black screen is displayed on a side edge or edges of two sides, it may also be considered that the foldable display displays the interface content in full screen.

The electronic device 100 may implement a photographing function by using the ISP, the camera 193, the video codec, the GPU, the display 194, the application processor, and the like.

The ISP is configured to process data fed back by the camera 193. For example, during photographing, a shutter is pressed, light is transmitted to a photosensitive element of the camera through a lens, an optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV. In some embodiments, the electronic device 100 may include one or N cameras 193, where N is a positive integer greater than 1.

The digital signal processor is configured to process a digital signal, and may further process another digital signal in addition to the digital image signal. For example, when the electronic device 100 selects a frequency, the digital signal processor is configured to perform Fourier transform on frequency energy.

The video codec is configured to compress or decompress a digital video. The electronic device 100 may support one or more video codecs. In this way, the electronic device 100 may play or record videos in a plurality of coding formats, for example, moving picture experts group (moving picture experts group, MPEG)-1, MPEG-2,

MPEG-3, and MPEG-4.

The NPU is a neural network (neural network, NN) computing processor, quickly processes input information by referring to a structure of a biological neural network, for example, by referring to a mode of transmission between human brain neurons, and may further continuously perform self-learning. The NPU can implement applications such as intelligent cognition of the electronic device 100, such as image recognition, facial recognition, speech recognition, and text understanding.

The external memory interface 120 may be configured to connect to an external memory card, for example, a micro SD card, to extend a storage capability of the electronic device 100. The external memory card communicates with the processor 110 through the external memory interface 120, to implement a data storage function. For example, files such as music and a video are stored in the external memory card.

The internal memory 121 may be configured to store computer-executable program code, and the computer-executable program code includes instructions. The processor 110 runs the instructions stored in the internal memory 121 to perform various function applications of the electronic device 100 and data processing. The internal memory 121 may include a program storage area and a data storage area. The program storage area may store an operating system, an application required by at least one function (for example, a sound playing function or an image playing function), and the like. The data storage area may store data (for example, audio data and a phone book) and the like created when the electronic device 100 is used. In addition, the internal memory 121 may include a high-speed random access memory, or may include a nonvolatile memory such as at least one disk storage device, a flash memory, or a universal flash storage (universal flash storage, UFS).

The electronic device 100 may implement an audio function such as music playing or recording by using the audio module 170, the speaker 170A, the receiver 170B, the microphone 170C, the headset jack 170D, the application processor, and the like.

The audio module 170 is configured to convert digital audio information into an analog audio signal for output, and is also configured to convert an analog audio input into a digital audio signal. The audio module 170 may be further configured to code and decode an audio signal. In some embodiments, the audio module 170 may be disposed in the processor 110, or some function modules in the audio module 170 are disposed in the processor 110.

The speaker 170A, also referred to as a "horn", is configured to convert an audio electrical signal into a sound signal. The electronic device 100 may listen to music or answer a call in a hands-free mode by using the speaker 170A.

The receiver 170B, also referred to as an "earpiece", is configured to convert an audio electrical signal into a sound signal. When a call is answered or voice information is received by using the electronic device 100, the receiver 170B may be put close to a human ear to listen to a voice.

The microphone 170C, also referred to as a "mike" or a "microphone", is configured to convert a sound signal into an electrical signal. When making a call or sending voice information, a user may make a sound near the microphone 170C through the mouth of the user, to enter a sound signal to the microphone 170C. At least one microphone 170C may be disposed in the electronic device 100. In some other embodiments, two microphones 170C may be disposed in the electronic device 100, to collect a sound signal and implement a noise reduction function. In some other embodiments, three, four, or more microphones 170C may alternatively be disposed in the electronic device 100, to collect a sound signal, implement noise reduction, identify a sound source, implement a directional recording function, and the like.

The headset jack 170D is configured to connect to a wired headset. The headset jack 170D may be the USB interface 130, or may be a 3.5 mm open mobile terminal platform (open mobile terminal platform, OMTP) standard interface or cellular telecommunications industry association of the USA (cellular telecommunications industry association of the USA, CTIA) standard interface.

The pressure sensor 180A is configured to sense a pressure signal, and can convert the pressure signal into an electrical signal. In some embodiments, the pressure sensor 180A may be disposed on the display 194. There are a plurality of types of pressure sensors 180A, for example, a resistive pressure sensor, an inductive pressure sensor, and a capacitive pressure sensor. The capacitive pressure sensor may include at least two parallel plates made of conductive materials. When force is applied to the pressure sensor 180A, capacitance between electrodes changes. The electronic device 100 determines pressure intensity based on the change of the capacitance. When a touch operation is performed on the display 194, the electronic device 100 detects strength of the touch operation by using the pressure sensor 180A. The electronic device 100 may also calculate a touch location based on a detection signal of the pressure sensor 180A. In some embodiments, touch operations that are performed at a same touch location but have different touch operation strength may correspond to different operation instructions. For example, when a touch operation whose touch operation strength is less than a first pressure threshold is performed on an icon of Messages, an instruction for viewing an SMS message is performed. When a touch operation whose touch operation strength is greater than or equal to the first pressure threshold is performed on the icon of Messages, an instruction for creating a new SMS message is performed.

The gyroscope sensor 180B may be configured to determine a motion posture of the electronic device 100. In some embodiments, an angular velocity of the electronic device 100 around three axes (namely, axes x, y, and z) may be determined by using the gyroscope sensor 180B. The gyroscope sensor 180B may be configured to implement image stabilization during photographing. For example, when the shutter is pressed, the gyroscope sensor 180B detects an angle at which the electronic device 100 jitters, calculates, based on the angle, a distance for which a lens module needs to compensate, and allows the lens to cancel the jitter of the electronic device 100 through reverse motion, to implement image stabilization. The gyroscope sensor 180B may also be used in a navigation scenario and a motion-controlled gaming scenario.

The barometric pressure sensor 180C is configured to measure barometric pressure. In some embodiments, the electronic device 100 calculates an altitude based on a barometric pressure value measured by the barometric pressure sensor 180C, to assist in positioning and navigation.

The magnetic sensor 180D includes a Hall effect sensor. The electronic device 100 may detect opening and closing of a flip cover by using the magnetic sensor 180D. In some embodiments, when the electronic device 100 is a flip phone, the electronic device 100 may detect opening and closing of a flip cover based on the magnetic sensor 180D. Further, a feature such as automatic unlocking upon opening of the flip cover is set based on a detected opening or closing state of the flip cover.

The acceleration sensor 180E may detect magnitudes of accelerations in various directions (usually on three axes) of the electronic device 100, and may detect a magnitude and a direction of gravity when the electronic device 100 is still. The acceleration sensor 180E may be further configured to identify a posture of the electronic device, and is applied to an application such as switching between a landscape mode and a portrait mode or a pedometer.

The range sensor 180F is configured to measure a distance. The electronic device 100 may measure a distance in an infrared or a laser manner. In some embodiments, in a photographing scenario, the electronic device 100 may measure a distance by using the range sensor 180F, to implement quick focusing.

The optical proximity sensor 180G may include, for example, a light-emitting diode (LED) and an optical detector, for example, a photodiode. The light-emitting diode may be an infrared light-emitting diode. The electronic device 100 emits infrared light by using the light-emitting diode. The electronic device 100 detects infrared reflected light from a nearby object by using the photodiode. When sufficient reflected light is detected, the electronic device 100 may determine that there is an object near the electronic device 100. When insufficient reflected light is detected, the electronic device 100 may determine that there is no object near the electronic device 100. The electronic device 100 may detect, by using the optical proximity sensor 180G, that the user holds the electronic device 100 close to an ear to make a call, to automatically perform screen-off for power saving. The optical proximity sensor 180G may also be used in a smart cover mode or a pocket mode to automatically perform screen unlocking or locking.

The ambient light sensor 180L is configured to sense ambient light brightness. The electronic device 100 may adaptively adjust brightness of the display 194 based on the sensed ambient light brightness. The ambient light sensor 180L may also be configured to automatically adjust white balance during photographing. The ambient light sensor 180L may further cooperate with the optical proximity sensor 180G to detect whether the electronic device 100 is in a pocket, to avoid an accidental touch.

The fingerprint sensor 180H is configured to collect a fingerprint. The electronic device 100 may use a feature of the collected fingerprint to implement fingerprint-based unlocking, application lock access, fingerprint-based photographing, fingerprint-based call answering, and the like.

The temperature sensor 180J is configured to detect a temperature. In some embodiments, the electronic device 100 executes a temperature processing policy by using the temperature detected by the temperature sensor 180J. For example, when the temperature reported by the temperature sensor 180J exceeds a threshold, the electronic device 100 lowers performance of a processor near the temperature sensor 180J, to reduce power consumption for thermal protection. In some other embodiments, when the temperature is less than another threshold, the electronic device 100 heats the battery 142 to prevent the electronic device 100 from being shut down abnormally because of a low temperature. In some other embodiments, when the temperature is less than still another threshold, the electronic device 100 boosts an output voltage of the battery 142 to avoid abnormal shutdown caused by a low temperature.

The touch sensor 180K is also referred to as a "touch panel". The touch sensor 180K may be disposed on the display 194, and the touch sensor 180K and the display 194 constitute a touchscreen, which is also referred to as a "touchscreen". The touch sensor 180K is configured to detect a touch operation performed on or near the touch sensor 180K. The touch sensor may transfer the detected touch operation to the application processor to determine a type of the touch event. The display 194 may provide a visual output related to the touch operation. In some other embodiments, the touch sensor 180K may alternatively be disposed on a surface of the electronic device 100 at a location different from that of the display 194.

The bone conduction sensor 180M may obtain a vibration signal. In some embodiments, the bone conduction sensor 180M may obtain a vibration signal of a vibration bone of a human vocal-cord part. The bone conduction sensor 180M may also be in contact with a body pulse to receive a blood pressure beating signal. In some embodiments, the bone conduction sensor 180M may alternatively be disposed in the headset, to obtain a bone conduction headset. The audio module 170 may obtain a speech signal through parsing based on the vibration signal that is of the vibration bone of the vocal-cord part and that is obtained by the bone conduction sensor 180M, to implement a speech function. The application processor may parse heart rate information based on the blood pressure beating signal obtained by the bone conduction sensor 180M, to implement a heart rate detection function.

The button 190 includes a power button, a volume button, and the like. The button 190 may be a mechanical button, or may be a touch button. The electronic device 100 may receive a key input, and generate a key signal input related to a user setting and function control of the electronic device 100.

The motor 191 may generate a vibration prompt. The motor 191 may be configured to provide an incoming call vibration prompt and a touch vibration feedback. For example, touch operations performed on different applications (for example, photographing and audio playing) may correspond to different vibration feedback effects. The motor 191 may also correspond to different vibration feedback effects for touch operations performed on different areas of the display 194. Different application scenarios (for example, a time reminder, information receiving, an alarm clock, and a game) may also correspond to different vibration feedback effects. A touch vibration feedback effect may be further customized.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or detached from the SIM card interface 195, to implement contact with or separation from the electronic device 100. The electronic device 100 may support one or N SIM card interfaces, where N is a positive integer greater than 1. The SIM card interface 195 may support a nano-SIM card, a micro-SIM card, a SIM card, and the like. A plurality of cards may be simultaneously inserted into a same SIM card interface 195. The plurality of cards may be of a same type or different types. The SIM card interface 195 is compatible with different types of SIM cards. The SIM card interface 195 is also compatible with an external memory card. The electronic device 100 interacts with a network through the SIM card, to implement functions such as calling and data communication. In some embodiments, the electronic device 100 uses an eSIM, that is, an embedded SIM card. The eSIM card may be embedded into the electronic device 100, and cannot be separated from the electronic device 100.

A software system of the electronic device 100 may use a layered architecture, an event-driven architecture, a micro kernel architecture, a micro service architecture, or a cloud architecture. In this embodiment of the present invention, an Android system of a layered architecture is used as an example to illustrate the software structure of the electronic device 100.

FIG. 2 is a block diagram of the software structure of the electronic device 100 according to an embodiment of this application.

In the layered architecture, software is divided into several layers, and each layer has a clear role and task. The layers communicate with each other through a software interface. In some embodiments, the Android system is divided into four layers: an application layer, an application framework layer, an Android runtime (Android runtime) and a system library, and a kernel layer from top to bottom.

The application layer may include a series of application packages.

As shown in FIG. 2, the application packages may include applications such as Camera, Gallery, Calendar, Phone, Maps, Navigation, WLAN, Bluetooth, Music, Videos, and Messages.

The application framework layer provides an application programming interface (application programming interface, API) and a programming framework for an application at the application layer. The application framework layer includes some predefined functions.

As shown in FIG. 2, the application framework layer may include a window manager, a content provider, a view system, a phone manager, a resource manager, a notification manager, and the like.

The window manager is configured to manage a window program. The window manager may obtain a size of the display, determine whether there is a status bar, perform screen locking, take a screenshot, and the like.

The content provider is configured to: store and obtain data, and enable the data to be accessed by an application. The data may include a video, an image, audio, calls that are made and answered, a browsing history and a bookmark, a phone book, and the like.

The view system includes visual controls, such as a control for displaying a text and a control for displaying a photo. The view system may be configured to construct an application. A display interface may include one or more views. For example, a display interface including an SMS message notification icon may include a text display view and a photo display view.

The phone manager is configured to provide a communication function for the electronic device 100, for example, management of a call status (including answering, declining, or the like).

The resource manager provides various resources such as a localized character string, an icon, a photo, a layout file, and a video file for an application.

The notification manager enables an application to display notification information in a status bar, and may be configured to convey a notification type message. The displayed notification information may automatically disappear after a short pause and require no user interaction. For example, the notification manager is configured to notify download completion, give a message notification, and the like. The notification manager may alternatively be a notification that appears in a top status bar of the system in a form of a graph or a scroll bar text, for example, a notification of an application running on a background or a notification that appears on the screen in a form of a dialog window. For example, text information is prompted in the status bar, an alert sound is played, the electronic device vibrates, or the indicator light blinks.

The Android runtime includes a kernel library and a virtual machine. The Android runtime is responsible for scheduling and management of the Android system.

The kernel library includes two parts: a performance function that needs to be invoked in Java language, and a kernel library of Android.

The application layer and the application framework layer run on the virtual machine. The virtual machine executes Java files of the application layer and the application framework layer as binary files. The virtual machine is configured to perform functions such as object lifecycle management, stack management, thread management, security and exception management, and garbage collection.

The system library may include a plurality of function modules, for example, a surface manager (surface manager), a media library (Media Library), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playback and recording in a plurality of commonly used audio and video formats, and static image files. The media library may support a plurality of audio and video coding formats, for example, MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

The following describes an example of a working process of software and hardware of the electronic device 100 with reference to a photographing scenario.

When the touch sensor 180K receives a touch operation, a corresponding hardware interrupt is sent to the kernel layer. The kernel layer processes the touch operation into an original input event (including information such as touch coordinates and a timestamp of the touch operation). The original input event is stored at the kernel layer. The application framework layer obtains the original input event from the kernel layer, and identifies a control corresponding to the input event. For example, the touch operation is a single-tap touch operation and a control corresponding to the single-tap operation is a control of an icon of Camera. A camera application invokes an interface at the application framework layer, so that the camera application is enabled. Then, the camera driver is enabled by invoking the kernel layer, and a static image or a video is captured by using the camera 193.

An embodiment of this application provides a display control method. The display control method may be implemented in the electronic device 100 by using hardware or software.

First, display control in this embodiment of this application is described. The display control may implement displaying a multi-task interface based on a first touch operation event entered by a user on a touchscreen of the electronic device 100, and displaying, in the multi-task interface, a one-hand operation interface based on a second touch operation event entered by the user on the electronic device 100. The displayed one-hand operation interface includes a first screen window interface and a second screen window interface. The first screen window interface may be an interface (as shown in FIG. 3(B)) obtained after a current operation interface is scaled down based on a first predetermined proportion, and the first screen window interface includes all interface elements in the current operation interface. The second screen window is an interface (as shown in FIG. 3(C)) that displays a predetermined part of the interface elements in the current operation interface. For example, the predetermined part of the interface elements may be an interface element at an upper half of the current operation interface, or may be an interface element at a lower half of the current operation interface, or may be interface elements in a first row and a second row in the current operation interface. This is not specifically limited herein.

Refer to FIG. 3(A) to FIG. 3(D). FIG. 3(A) to FIG. 3(D) are a schematic diagram of a user interface according to an embodiment of this application. FIG. 3(A) shows a home screen interface 10 (that is, the current operation interface) of the electronic device 100. The home screen interface 10 includes a calendar indicator 101, a weather indicator 102, application icons 103, and a status bar 104.

The calendar indicator 101 may be used to indicate current time, for example, a date, a day of a week, and hour and minute information.

The weather indicator 102 may be used to indicate a weather type, for example, cloudy to clear or light rain, may be used to indicate information such as a temperature, or may be used to indicate a location.

The application icons 103 may include, for example, an icon of QQ, an icon of WeChat, an icon of Browser, an icon of Weibo, an icon of Videos, an icon of Settings, an icon of Calculator, an icon of Camera, an icon of Stocks, an icon of Books, an icon of Album, and an icon of Taobao.

The status bar 104 may include an operator name (for example, China Mobile), signal strength, an icon of Wi-Fi, time, and a current battery level.

FIG. 3(B) shows a one-hand operation interface 20 displayed on the electronic device 100. The one-hand operation interface 20 includes a first screen window interface 201, and the first screen window interface 201 is an interface obtained after the home screen interface 10 is scaled down based on the first predetermined proportion, including all interface elements in the home screen interface 10. Pixels of the interface elements included in the first screen window interface 201 are less than pixels of the interface elements in the home screen interface 10, that is, the interface elements included in the first screen window interface 201 are interface elements obtained after the interface elements in the home screen interface 10 is scaled down based on the first predetermined proportion.

FIG. 3(C) shows another one-hand operation interface 30 displayed on the electronic device 100. The one-hand operation interface 30 includes a second screen window interface 301. The second screen window interface 301 is an interface that displays an upper half of the interface elements in the home screen interface 10. Essentially, the second screen window interface 301 moves the current operation interface, that is, the home screen interface 10, down as a whole, so that the upper half of the home screen interface 10 is displayed at an original lower half location, so that the user performs a one-hand operation. The first screen window interface 301 displays only some interface elements in the home screen interface 10, and pixels of the some interface elements do not change, that is, remain the original pixels.

FIG. 3(D) shows another one-hand operation interface 40 displayed on the electronic device 100. The one-hand operation interface 40 includes a second screen window interface 401. When other interface elements 402 in the home screen interface 10 need to be displayed in the second screen window interface 401, the user may indicate, by sliding down, the electronic device 100 to display the other interface elements 402 that are in the home screen interface 10 and that are not displayed in the second screen window interface 401.

Currently, the electronic device 100 generally implements system navigation functions in three manners. 1. The system navigation functions such as returning to a previous interface, returning to a home screen, and entering a multi-task interface are respectively implemented by using three virtual controls displayed in a form of virtual buttons on the screen of the electronic device 100. For example, the user may return to a previous interface by using a triangular virtual control, and return to the home screen by using a circular virtual control, and enter a multi-task interface by using a square virtual control. 2. The navigation functions such as returning to a previous interface, returning to a home screen, and entering a multi-task interface are implemented by using a virtual control that is hovering and displayed in a form of a virtual button on the screen of the electronic device 100. The user may return to a previous interface by gently touching the virtual control, return to the home screen by touching and holding the virtual control and then releasing a finger, and enter a multi-task interface by sliding left or right after touching and holding the virtual control. 3. The system navigation functions such as returning to a previous interface, returning to a home screen, and entering a multi-task interface are implemented by entering different gestures on the touchscreen of the electronic device 100. For example, the user may return to a previous interface by sliding, on the screen inwardly, from an edge of the touchscreen of the electronic device 100, return to the home screen by quickly sliding up from a screen bottom of the touchscreen of the electronic device 100 and then releasing a finger, and enter a multi-task interface by sliding up from the screen bottom of the touchscreen of the electronic screen 100 and pausing for a moment.

It may be understood that, in the first manner of implementing the system navigation functions, the displayed virtual controls needs to occupy a part of a screen area of the electronic device 100, and cannot meet a requirement of people for pursuing a maximum screen-to-body ratio. Although the maximum screen-to-body ratio may also be implemented in a hidden manner, however, people still need to operate to hide the displayed virtual controls. This increases an operation of the user. In the second manner of implementing the system navigation functions, the displayed virtual control blocks an element displayed on the touchscreen of the electronic device 100. This also reduces user experience. The third manner of implementing the system navigation functions totally by using gestures solves the defects of the two manners, and improves user experience.

When the electronic device 100 implement, in the third manner, the system navigation functions such as returning to a previous interface, returning to the home screen, and entering a multi-task interface, a current navigation mode of the electronic device 100 is a gesture navigation mode. In this mode, the user may implement display control on the electronic device 100 by using different gestures. However, in the conventional technology, when a one-hand operation interface is started, there are problems of low operation efficiency and a high misoperation rate.

For example, when the user takes a public transportation means, in some cases, the user cannot operate the electronic device 100 with two hands simultaneously, and the user can only hold the electronic device 100 with one hand and perform a one-hand operation. When a size of the electronic device 100 is relatively large, to facilitate the user operating the screen of the electronic device 100, the conventional technology provides the one-hand operation interface. In the interface, a screen window of the electronic device 100 is scaled down or moved to an area that can be touched by the user with one hand, so that the user can flexibly operate the screen of the electronic device 100 in the area. However, when the user holds the electronic device 100 with one hand and performs a one-hand operation, due to a limitation of the one-hand operation, efficiency of starting the one-hand operation interface is relatively low, and a misoperation rate is relatively high.

Definitions of the first touch operation event and the second touch operation event are given.

The first touch operation event is used to start a multi-task interface. When the electronic device 100 detects the first touch operation event entered by the user on the touchscreen, the multi-task interface is displayed on the electronic device 100. The second touch operation event is used to start a one-hand operation interface in the multi-task interface. The one-hand operation interface is displayed on the electronic device 100 if the electronic device 100 detects, in the multi-task interface, the second touch operation event entered by the user on the touchscreen.

It should be noted that, the first touch operation event and the second touch operation event are different touch operation events, and the difference may be reflected in time or space. For example, a sliding operation detected at a time point is a first touch operation event, and a sliding operation detected at another time point is a second touch operation event. For example, a sliding operation corresponding to a sliding track is a first touch operation event, and a sliding operation corresponding to another sliding track is a second touch operation event. That is, "first" and "second" of the first touch operation event and the second touch operation event have no special meaning, and are only used to distinguish between different touch operation events.

In this embodiment of this application, an operation object corresponding to the first touch operation event is the current operation interface, and an operation object corresponding to the second touch operation event is an interface obtained after the current operation interface is scaled down based on a second predetermined proportion.

For example, the first touch operation event or the second touch operation event in this embodiment of this application may be a sliding operation, including but not limited to sliding left, sliding right, sliding up, and sliding down. Sliding left indicates that a sliding end point is relatively located on a left side of a sliding start point after a sliding operation ends, sliding right indicates that a sliding end point is relatively located on a right side of a sliding start point after a sliding operation ends, sliding up indicates that a sliding end point is relatively located on a upper side of a sliding start point after a sliding operation ends, and sliding down indicates that a sliding end point is relatively located on a lower side of a sliding start point after a sliding operation ends.

It should be noted that, in this embodiment of this application, sliding left may be sliding left in parallel, or sliding towards an upper left direction; sliding right may be sliding right in parallel, or sliding towards an upper right direction; and sliding down may be sliding down vertically, or may be sliding towards a lower left direction or a lower right direction, or may be first sliding left or right and then sliding down.

Refer to FIG. 4(A) to FIG. 4(D). FIG. 4(A) to FIG. 4(D) are a schematic diagram of an application scenario according to an embodiment of this application. As shown in FIG. 4(A) to FIG. 4(D), an arrow may represent a sliding track, a start point of the arrow may be represented as a sliding start point S, an end point of the arrow may be represented as a sliding end point E, and a midpoint M of the arrow may represent a transfer point of two halves of sliding tracks in different directions in a continuous sliding track, that is, M represents an end point of a small segment of sliding track and a start point of another small segment of sliding track, connecting two sliding tracks in different directions.

It should be noted that the sliding start point S may be understood as a first pressing point in a segment of sliding track detected by the electronic device 100 on the touchscreen, and the sliding end point E may be understood as a last pressing point in a segment of sliding track detected by the electronic device 100 on the touchscreen.

In a specific application scenario, the current screen window of the electronic device 100 displays the home screen interface 10 shown in FIG. 3(A), and the user holds the electronic device 100 with a right hand and performs a one-hand operation. As shown in FIG. 4(A), when a finger of the user, for example, a thumb, slides, on the screen inwardly, from a lower right corner edge location S at the screen bottom of the touchscreen of the electronic device 100 to a location E on the screen, the electronic device 100 detects the touch operation event, starts a one-hand operation interface, scales down the current operation interface based on the first predetermined proportion, to obtain the first screen window interface 201, and displays the first screen window interface 201 in the lower right corner of the touchscreen of the electronic device 100.

It may be understood that, in the application scenario, the user holds the electronic device 100 with the right hand and performs a one-hand operation, and when the thumb slides, on the screen inwardly, from the lower right corner screen edge of the touchscreen, the thumb needs to be bent to a specific extent to touch the lower right corner edge of the touchscreen. This needs a relatively large operation amplitude, is not convenient for the user to perform the operation, and causes low operation efficiency. Especially, when the thumb of the user does not touch the lower right corner screen edge of the touchscreen, but as shown in FIG. 4(A), only when the thumb of the user slides, on the touchscreen inwardly, at any location in a sector area T except the lower right corner screen edge of the touchscreen, a misoperation is likely to occur. For example, when the user slides, on the touchscreen inwardly, at any location in the sector area T except the lower right corner screen edge location of the touchscreen, and a sliding direction is up, the electronic device 100 may start a multi-task interface, instead of the one-hand operation interface that the user actually wants to start. In this case, the user needs to perform an operation again to start the one-hand operation interface, thereby greatly reducing operation efficiency and greatly reducing use experience of the user.

In another specific application scenario, the current screen window of the electronic device 100 displays the home screen interface 10 shown in FIG. 3(A), and the user holds the electronic device 100 with the right hand and performs a one-hand operation. As shown in FIG. 4(B), when the finger of the user, for example, the thumb, slides down, on the screen outwardly, from any location S in a left half screen area at the screen bottom of the touchscreen of the electronic device 100 to a location E, the electronic device 100 detects the touch operation event, starts a one-hand operation interface, scales down the current operation interface based on the first predetermined proportion, to obtain the first screen window interface 201, and displays the first screen window interface 201 in the lower right corner of the touchscreen of the electronic device 100.

It may be understood that, in the application scenario, the user holds the electronic device 100 with the right hand and performs a one-hand operation, and when the thumb slides down from the touchscreen of the electronic device 100 inwardly to a screen bottom edge, the thumb needs to be bent to the screen bottom edge of the touchscreen. This needs a relatively large operation amplitude, is not convenient for the user to perform the operation, and causes low operation efficiency. In addition, when the thumb of the user slides down to the outside of the touchscreen, due to inertia of sliding down, the user may push the electronic device 100 out of the hand, thereby reducing use experience of the user. Moreover, in the current gesture navigation mode, an operation corresponding to the touch operation of sliding down is generally sliding down a page. That is, when the touch operation of sliding down is used to start a one-hand operation interface, sliding down a page to display content of another page is easily triggered by mistake.

To reduce a conflict of the gesture of sliding down and achieve an objective of starting a one-hand operation interface, a screen area used to start the one-hand operation interface is set at the screen bottom. When the electronic device 100 detects that a sliding start point of a touch operation event is within a range of the screen area, and when a sliding end point is at a specified location outside the screen area, for example, the screen bottom edge location, or some coordinates of a sliding track corresponding to the touch operation event fall within the range of the screen area, and the touch operation event slides to a specified location, for example, the screen bottom edge location, the electronic device 100 starts the one-hand operation interface. However, this method for starting a one-hand operation interface still has problems of low operation efficiency and a high misoperation rate, thereby reducing use experience of the user.

In another specific application scenario, the current screen window of the electronic device 100 displays the home screen interface 10 shown in FIG. 3(A), and the user holds the electronic device 100 with the right hand and performs a one-hand operation. As shown in FIG. 4(C), when the finger of the user, for example, the thumb, slides, on the screen inwardly, from any location S on a right screen edge of the touchscreen of the electronic device 100 to a location M, and then slides from the location M on the screen to any location E on the right screen edge of the touchscreen, the electronic device 100 detects the touch operation event, starts a one-hand operation interface, scales down the current operation interface based on the first predetermined proportion, to obtain the first screen window interface 201, and displays the first screen window interface 201 in the lower right corner of the touchscreen of the electronic device 100.

It should be noted that the location S and the location E may be two overlapping pressing points, or may be two different pressing points on a screen edge of the touchscreen of the electronic device 100.

It may be understood that, in the application scenario, the user holds the electronic device 100 with the right hand and performs a one-hand operation, and after the thumb slides, on the screen inwardly, from a left screen edge of the touchscreen of the electronic device 100 to a location, the thumb slides from the location to the left screen edge by switching a direction. Although a bending amplitude of the thumb is reduced, in the current gesture navigation mode, when the thumb moves, on the screen inwardly, from the left screen edge or the right screen edge of the touchscreen, a previous-level user interface is correspondingly displayed. Therefore, to start the one-hand operation interface by using the touch operation event shown in FIG. 4(C), the user may need to perform a plurality of operations to start the one-hand operation interface, and problems of low operation efficiency and a high misoperation rate still exist.

In another specific application scenario, the current screen window of the electronic device 100 displays the home screen interface 10 shown in FIG. 3(A), and the user holds the electronic device 100 with the right hand and performs a one-hand operation. As shown in FIG. 4(D), when the finger of the user, for example, the thumb, slides down, on the screen outwardly, from any location S in a specified area at the screen bottom of the touchscreen of the electronic device 100 to a location E, the electronic device 100 detects the touch operation event, and starts a one-hand operation interface, moving an upper half of the current operation interface to a lower half screen area of the touchscreen for display. The upper half screen area of the touchscreen does not display any element of the current operation interface. As shown in FIG. 4(D), the second screen window interface 301 is displayed in the lower right corner of the touchscreen of the electronic device 100.

To more conveniently and quickly start a one-hand operation interface and effectively reduce a misoperation rate, an embodiment of this application provides a display control method.

Refer to FIG. 5. FIG. 5 is a schematic flowchart of a display control method according to an embodiment of this application. As shown in FIG. 5, the method includes steps S101 and S102.

S101: Display a multi-task interface if a first touch operation event entered by a user on a touchscreen of the electronic device 100 is detected.

The first touch operation event includes a sliding distance. Before the multi-task interface is displayed, a current operation interface is gradually scaled down as the sliding distance increases. The sliding distance is a vertical distance of a current pressing point relative to a screen bottom of the touchscreen in the touch operation event.

When the electronic device 100 is in a gesture navigation mode, in a process in which a finger of the user slides up from the screen bottom of the touchscreen of the electronic device 100, the sliding distance gradually increases. After the sliding distance reaches a preset threshold, the electronic device 100 displays the multi-task interface. After the electronic device 100 displays the multi-task interface, when the finger of the user changes the sliding direction and slides down, the sliding distance gradually decreases. In a process in which the touch operation event occurs, when the sliding distance gradually increases, an operation object corresponding to the first touch operation event is gradually scaled down based on a second predetermined proportion. When the sliding distance increases and then gradually decreases, the operation object corresponding to the first touch operation event is gradually scaled up based on the second predetermined proportion, so that in the process in which the touch operation event occurs, visual staying in an intermediate process is formed. Therefore, the user can truly experience a "sliding" effect. In other words, the current operation interface generates a window following effect as the sliding distance changes, that is, a gesture of the user changes.

In this embodiment of this application, when the first touch operation event entered by the user on the touchscreen of the electronic device 100 is detected, the multi-task interface is displayed. In a process of displaying the multi-task interface, the operation object corresponding to the first touch operation event changes as the sliding distance and the sliding direction change, moves, with the finger of the user, the operation object corresponding to the first touch operation event, and adjusts a window size of the operation object corresponding to the first touch operation event. The window size of the operation object is inversely proportional to the sliding distance. A larger sliding distance indicates a smaller window size, and a smaller sliding distance indicates a larger window size. After the user releases the finger, window sizes of operation objects in the multi-task interface displayed on the electronic device 100 are consistent, and the user may touch the touchscreen of the electronic device 100 again to select, by sliding left or sliding right, an operation object displayed in a current screen window of the electronic device 100.

Currently, in the conventional technology, when a one-hand operation interface is started, only after the electronic device 100 detects that execution of the touch operation event is completed, the one-hand operation interface instantly scales down the current operation interface and displays the current operation interface in a screen area to which the first screen window interface 201 belongs, or instantly moves the current operation interface to a screen area to which the second screen window interface 301 belongs, and does not change as the sliding distance changes. Therefore, no window following effect is generated. In this embodiment of this application, if a second touch operation event entered by the user on the touchscreen is detected in the multi-task interface, when the electronic device 100 displays the one-hand operation interface, the window following effect can be generated, thereby improving visual experience of the user.

S102: Display the one-hand operation interface on the electronic device 100 if the second touch operation event entered by the user on the touchscreen is detected in the multi-task interface.

Refer to FIG. 6(A) to FIG. 6(D). FIG. 6(A) to FIG. 6(D) are a schematic diagram of another user interface according to an embodiment of this application. FIG. 6(A) shows an application interface of Album installed in the electronic device 100. The electronic device 100 is currently in the gesture navigation mode. As shown in FIG. 6(A), a current operation interface 501 includes an application interface 502 of Album that is operable and a status bar 503. When the finger of the user slides up, on the screen inwardly, from the screen bottom of the touchscreen of the electronic device 100, the electronic device 100 detects the first touch operation event entered by the user on the touchscreen. After the finger of the user slides up for a specific distance on the touchscreen, the electronic device 100 displays a multi-task interface shown in FIG. 6(B). The multi-task interface includes at least two multi-task objects, and one of the multi-task objects is the operation object corresponding to the first touch operation event.

As shown in FIG. 6(B), the multi-task interface includes an operation object 601 corresponding to the first touch operation event, and a first interface 602 of another application such as QQ. The first interface 602 is an interface obtained after a predetermined area of the application interface of QQ is scaled down based on a third predetermined proportion, the operation object 601 corresponding to the first touch operation event is an interface obtained after the application interface 502 of Album is scaled down based on the second predetermined proportion. If the second touch operation event entered by the user on the touchscreen is detected in the multi-task interface shown in FIG. 6(B), a one-hand operation interface 701 obtained after the application interface 502 of Album shown in FIG. 6(C) is scaled down based on the first predetermined proportion is displayed on the electronic device 100.

If the second touch operation event entered by the user on the touchscreen is not detected in the multi-task interface shown in FIG. 6(B), and the finger of the user leaves the touchscreen, a multi-task interface shown in FIG. 6(D) is displayed on the electronic device 100. As shown in FIG. 6(D), the multi-task interface includes at least two multi-task objects. One of the multi-task objects is the operation object corresponding to the first touch operation event. As shown in FIG. 6(D), the multi-task interface includes a second interface 801 and a third interface 802. The second interface 801 is an interface obtained after the application interface of QQ is scaled down based on the third predetermined proportion, and the second interface 802 is an interface obtained after the predetermined area of the application interface 502 of Album is scaled down based on to the third predetermined proportion, that is, window sizes of the second interface 801 and the third interface 803 are consistent, and the second interface 801 and the third interface 803 have a same window size.

In this embodiment of this application, the second touch operation event includes the sliding direction. If it is detected, in the multi-task interface, that the sliding direction entered by the user on the touchscreen is a predetermined direction, the one-hand operation interface is displayed on the electronic device 100.

For example, the one-hand operation interface is displayed on the electronic device 100 if it is detected, in the multi-task interface, that the sliding direction entered by the user on the touchscreen is the predetermined direction and sliding reaches a predetermined area.

The predetermined area may be a left screen edge or a right screen edge of the touchscreen of the electronic device 100, or may be a specified area within a range of a bottom screen area of the touchscreen of the electronic device 100.

In a specific application scenario, in the multi-task interface, the finger of the user slides left or right, so that a window edge of the operation object corresponding to the second touch operation event fits the left screen edge of the touchscreen. Alternatively, the finger of the user slides down, so that the operation object corresponding to the second touch operation event is slid to the specified area within the range of the bottom screen area of the touchscreen, that is, when the electronic device 100 detects that the sliding direction entered by the user on the touchscreen is the predetermined direction and sliding reaches the predetermined area, the electronic device 100 displays the one-hand operation interface on the electronic device 100.

In this embodiment of this application, when the user holds the electronic device 100 with one hand and performs a one-hand operation, a habitual gesture of the user is related to a hand holding the electronic device 100. For example, when the user holds the electronic device 100 with a left hand and performs a one-hand operation, sliding left is more convenient than sliding right. However, when the user holds the electronic device 100 with a right hand and performs a one-hand operation, sliding right is more convenient than sliding left. To make the one-hand operation interface displayed on the electronic device 100 convenient for the user to perform an operation, in this embodiment of this application, based on different sliding directions, the first screen window interface or the second screen window interface is displayed at different locations of the touchscreen, to improve use experience of the user.

For example, the first screen window interface is displayed on the electronic device 100 if it is detected, in the multi-task interface, that the sliding direction entered by the user on the touchscreen is left or right. The second screen window interface is displayed on the electronic device 100 if it is detected, in the multi-task interface, that the sliding direction entered by the user on the touchscreen is down.

For example, the first screen window interface is displayed in a lower left corner of the touchscreen if it is detected, in the multi-task interface, that the sliding direction entered by the user on the touchscreen is left. The first screen window interface is displayed in a lower right corner of the touchscreen if it is detected, in the multi-task interface, that the sliding direction entered by the user on the touchscreen is right. The second screen window interface is displayed at a lower half of the touchscreen if it is detected, in the multi-task interface, that the sliding direction entered by the user on the touchscreen is down.

It should be noted that, in some embodiments, in a process in which the first touch operation event and the second touch operation event occur, the finger of the user keeps performing a related operation on the touchscreen. After the multi-task interface is displayed, if the finger of the user leaves the touchscreen, the multi-task interface is displayed on the electronic device 100. If the finger of the user slides left or right on the touchscreen again, when the electronic device 100 detects the touch operation event, the electronic device 100 displays a multi-task object in a corresponding direction based on the sliding direction. The multi-task object is an application interface of at least one application in the multi-task interface. After the multi-task interface is displayed, if the finger of the user does not leave the touchscreen, and continues to slide left, right, or down on the touchscreen, the electronic device 100 displays the first screen window interface or the second screen window interface on the electronic device 100 based on the sliding direction.

Refer to FIG. 7(A) to FIG. 7(D). FIG. 7(A) to FIG. 7(D) are a schematic diagram of another application scenario according to an embodiment of this application. As shown in FIG. 7(A), when the finger of the user, for example, the thumb, slides up, on the screen inwardly, from the screen bottom edge location S of the touchscreen of the electronic device 100, the electronic device 100 detects a first touch operation event entered by the user on the touchscreen. When the finger of the user slides to a specified area 901 shown in FIG. 7(B), a multi-task interface shown in FIG. 7(B) is displayed. The specified area 901 is a gesture operation hot zone of the multi-task interface. After the finger of the user slides to the gesture operation hot zone, the electronic device 100 displays the multi-task interface on the touchscreen. Alternatively, after the electronic device 100 detects that the finger of the user slides for a specified distance, the multi-task interface shown in FIG. 7(B) is displayed on the electronic device 100. As shown in FIG. 7(C), in the multi-task interface shown in FIG. 7(B), the user continues to slide right on the touchscreen without releasing the finger, that is, when the thumb of the user continues to slide right from a location M to any location between a location E and a location E', the electronic device 100 detects a second touch operation event entered by the user on the touchscreen of the electronic device 100, and moves right, based on a sliding direction of the second touch operation event, an operation object 1101 corresponding to the second touch operation event. When a window edge of the operation object 1101 corresponding to the second touch operation event fits the left screen edge location of the touchscreen, the electronic device 100 determines that the user attempts to start a one-hand operation interface. After the finger of the user leaves the electronic device 100, as shown in FIG. 7(D), a first screen window interface 701 is displayed in a lower right corner of the screen of the electronic device 100.

In this embodiment of this application, after the second touch operation event is completed, that is, when the finger of the user leaves the touchscreen and no longer acts on the operation object corresponding to the second touch operation event, to reduce a visual impact problem caused to the user because the operation object corresponding to the second touch operation event is instantaneously scaled down or moved to the first screen window interface 201 or the second screen window interface 301 is instantaneously moved, and to improve visual experience of the user, in this embodiment of this application, when the second touch operation event entered by the user on the touchscreen is detected, the operation object corresponding to the second touch operation event is moved at a preset acceleration, and after being moved to a predetermined location, the operation object is converted into the one-hand operation interface for display.

Refer to FIG. 8(A) to FIG. 8(D). FIG. 8(A) to FIG. 8(D) are a schematic diagram of another user interface according to an embodiment of this application. As shown in FIG. 8(A), when the electronic device 100 detects, in a multi-task interface, a second touch operation event entered by a user, for example, sliding left, an operation object 1201 corresponding to the second touch operation event is moved left, along with movement of the sliding direction, to the left screen edge of the electronic device 100. After a window edge of the operation object 1201 corresponding to the second touch operation event fits the left screen edge of the electronic device 100 and the user releases a finger, for example, when a finger of the user leaves a touchscreen at a location E or a location E', as shown in FIG. 8(B) and FIG. 8(C), the electronic device 100 moves down the operation object corresponding to the second touch operation event at a preset acceleration a. As shown in FIG. 8(D), after the operation object corresponding to the second touch operation event moves to a predetermined location, for example, in a lower left corner of the screen, the operation object corresponding to the second touch operation event is converted into a one-hand operation interface 1501 for display on the electronic device 100, and the preset acceleration a returns to zero.

In some embodiments, a window size of the one-hand operation interface is fixed. However, after the second touch operation event is completed, that is, when the finger of the user leaves the touchscreen of the electronic device 100, a window size of the operation object corresponding to the second touch operation event is inconsistent with the window size of the one-hand operation interface. If the operation object corresponding to the second touch operation event is moved to the predetermined location and then is converted into the one-hand operation interface for display, visual experience of the user is reduced due to a pixel difference. To improve visual experience of the user, when the operation object corresponding to the second touch operation event is moved at the preset acceleration, the window size of the operation object corresponding to the second touch operation event further needs to be adjusted, so that the window size of the operation object is consistent with the window size of the one-hand operation interface.

For example, the window size of the operation object corresponding to the second touch operation event is compared with the window size of the one-hand operation interface. If the window size of the operation object corresponding to the second touch operation event is less than or greater than the window size of the one-hand operation interface, it is determined, based on a ratio of the window size of the operation object corresponding to the second touch operation event to the window size of the one-hand operation interface, a proportion for adjusting the window size of the operation object corresponding to the second touch operation event. The window size of the operation object corresponding to the second touch operation event is adjusted based on the determined proportion, so that the window size of the operation object is consistent with the window size of the one-hand operation interface.

Refer to FIG. 9(A) to FIG. 9(D). FIG. 9(A) to FIG. 9(D) are a schematic diagram of still another user interface according to an embodiment of this application. FIG. 9(A) shows a multi-task interface displayed when a finger of a user moves from a location S to a location M. In the multi-task interface shown in FIG. 9(A), when the finger of the user does not leave the touchscreen and continues to slide from the location M to a location E, the electronic device 100 detects a second touch operation event entered by the user on the touchscreen, that is, sliding down, an operation object 1601 corresponding to the second touch operation event increases as a sliding distance decreases, and the finger of the user releases the finger after sliding to the location E, the electronic device 100 determines that the user attempts to start a one-hand operation interface. The location E may be any location in a specified area that is preset and used to indicate to start the one-hand operation interface. As shown in FIG. 9(C), after determining that the user attempts to start the one-hand operation interface, the electronic device 100 moves, at a preset acceleration, the operation object 1601 corresponding to the second touch operation event. When a window edge of the operation object 1601 corresponding to the second touch operation event fits the screen bottom edge of the touchscreen of the electronic device 100, the operation object 1601 corresponding to the second touch operation event is replaced by a one-hand operation interface 1801, and the one-hand operation interface 1801 continues to be moved at the preset acceleration a. A one-hand operation interface 1901 shown in FIG. 9(D) is displayed on the electronic device 100 until a window top of the one-hand operation interface 1801 coincides with a screen center line of the touchscreen.

As shown in FIG. 9(C) and FIG. 9(D), after a window bottom edge of the operation object corresponding to the second touch operation event fits the screen bottom edge of the touchscreen of the electronic device 100 and the operation object corresponding to the second touch operation event is converted into the one-hand operation interface, display of elements in the one-hand operation interface is gradually reduced as a moving distance increases.

In some application scenarios, the current screen window of the electronic device 100 displays a home screen interface or another interface other than the home screen interface. When the current screen window of the electronic device 100 displays the home screen interface or the another interface, the user attempts to start the one-hand operation interface to display the one-hand operation interface on the electronic device 100. Because the home screen interface or any interface other than the home screen interface does not belong to a task window in the multi-task interface that can be displayed, a corresponding window following effect cannot be displayed. To resolve this problem, a current interface may be set as a virtual task. When the finger of the user slides up from the screen bottom of the touchscreen, a multi-task interface including the zoomed current interface is displayed. When the second touch operation event entered by the user on the touchscreen is detected, an element of the zoomed current interface is displayed in the first screen window interface of the small screen. In this process, a window size corresponding to the current interface is changed based on the sliding distance of the finger of the user, to provide better visual experience and use experience for the user.

It should be noted that, in the second touch operation event, only when it is determined that the touch direction entered by the user on the touchscreen is down, the one-hand operation interface may be started, and the finger does not need to slide to the screen bottom of the touchscreen and outside the screen bottom. Therefore, a probability that the electronic device 100 is pushed out of the hand due to excessive force of the user is reduced, and a finger operation amplitude of the user is reduced, so that an operation is relatively smooth, thereby improving operation efficiency of the user.

It may be understood that, in the multi-task interface, the electronic device 100 starts the one-hand operation interface by detecting the second touch operation event entered by the user on the touchscreen, so that the one-hand operation interface can be started more conveniently and more quickly, a misoperation rate can be effectively reduced.

In this embodiment of this application, after the first touch operation event entered by the user on the touchscreen of the electronic device 100 is detected, the multi-task interface is displayed, and if it is detected, in the multi-task interface, that the second touch operation event entered by the user on the touchscreen of the electronic device 100, the one-hand operation interface is displayed on the electronic device, so that the one-hand operation interface can be started more conveniently and quickly, and a misoperation rate can be effectively reduced.

An embodiment of this application further provides a computer-readable storage medium. The computer-readable storage medium stores instructions. When the instructions are run on a computer or a processor, the computer or the processor is enabled to perform one or more steps in any one of the methods.

An embodiment of this application further provides a computer program product including instructions. When the computer program product is run on a computer or a processor, the computer or the processor is enabled to perform one or more steps in any one of the methods.

An embodiment of this application further provides a chip system, including a memory and a processor. When the chip system runs, the chip system or the processor is enabled to perform one or more steps in any of the methods. The chip system may be a single chip or a chip module including a plurality of chips.

All or some of embodiments may be implemented by using software, hardware, firmware, or any combination thereof. When the software is used to implement embodiments, all or some of embodiments may be implemented in a form of a computer program product. The computer program product includes one or more computer instructions. When the computer program instructions are loaded and executed on a computer, procedures or functions according to embodiments of this application are all or partially generated. The computer may be a general-purpose computer, a special-purpose computer, a computer network, or another programmable apparatus. The computer instructions may be stored in a computer-readable storage medium, or transmitted by using the computer-readable storage medium. The computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like.

Persons of ordinary skill in the art may understand that all or some of the procedures of the methods in embodiments may be implemented by a computer program instructing related hardware. The program may be stored in the computer-readable storage medium. When the program is executed, the procedures in the method embodiments may be included. The foregoing storage medium includes any medium that can store program code, such as a ROM, a random access memory RAM, a magnetic disk, or an optical disc.

The foregoing descriptions are merely specific implementations of embodiments of this application, but are not intended to limit the protection scope of embodiments of this application. Any variation or replacement within the technical scope disclosed in embodiments of this application shall fall within the protection scope of embodiments of this application. Therefore, the protection scope of embodiments of this application shall be subject to the protection scope of the claims.

## Claims

1. A display control method, applied to an electronic device, and comprising:
displaying a multi-task interface if a first touch operation event entered by a user on a touchscreen of the electronic device is detected, wherein the first touch operation event is used to start the multi-task interface; and
displaying a one-hand operation interface on the electronic device if a second touch operation event entered by the user on the touchscreen is detected in the multi-task interface.

2. The display control method according to claim 1, wherein the second touch operation event comprises a sliding direction; and
correspondingly, the displaying a one-hand operation interface on the electronic device if a second touch operation event entered by the user on the touchscreen is detected in the multi-task interface comprises:
displaying the one-hand operation interface on the electronic device if it is detected, in the multi-task interface, that the sliding direction entered by the user on the touchscreen is a predetermined direction.

3. The display control method according to claim 2, wherein the one-hand operation interface comprises a first screen window interface or a second screen window interface; and
correspondingly, the displaying a one-hand operation interface on the electronic device if a second touch operation event entered by the user on the touchscreen is detected in the multi-task interface comprises:
displaying the first screen window interface on the electronic device if it is detected, in the multi-task interface, that the sliding direction entered by the user on the touchscreen is left or right; or
displaying the second screen window interface on the electronic device if it is detected, in the multi-task interface, that the sliding direction entered by the user on the touchscreen is down.

4. The display control method according to claim 3, wherein the displaying the first screen window interface on the electronic device if it is detected, in the multi-task interface, that the sliding direction entered by the user on the touchscreen is left or right comprises:
displaying the first screen window interface in a lower left corner of the touchscreen if it is detected, in the multi-task interface, that the sliding direction entered by the user on the touchscreen is left; or
displaying the first screen window interface in a lower light corner of the touchscreen if it is detected, in the multi-task interface, that the sliding direction entered by the user on the touchscreen is right.

5. The display control method according to claim 3, wherein the displaying the half-screen window interface on the electronic device if it is detected, in the multi-task interface, that the sliding direction entered by the user on the touchscreen is down comprises:
displaying the second screen window interface at a lower half of the touchscreen if it is detected, in the multi-task interface, that the sliding direction entered by the user on the touchscreen is down.

6. The display control method according to claim 2, wherein the displaying the one-hand operation interface on the electronic device if it is detected, in the multi-task interface, that the sliding direction entered by the user on the touchscreen is a predetermined direction comprises:
displaying the one-hand operation interface on the electronic device if it is detected, in the multi-task interface, that the sliding direction entered by the user on the touchscreen is the predetermined direction and sliding reaches a predetermined area.

7. The display control method according to any one of claims 1 to 6, wherein the displaying a one-hand operation interface on the electronic device if a second touch operation event entered by the user on the touchscreen is detected comprises:
if the second touch operation event entered by the user on the touchscreen is detected, moving, by using a preset acceleration, an operation object corresponding to the second touch operation event, and converting the operation object into the one-hand operation interface for display after the operation object is moved to a preset location.

8. An electronic device, comprising one or more processors, a memory, and a display, wherein
the memory and the display are coupled to the one or more processors, the memory is configured to store computer program code, and the computer program code comprises computer instructions; and
when the one or more processors execute the computer instructions, the electronic device is enabled to implement the display control method according to any one of claims 1 to 7.

9. A computer-readable storage medium, wherein the computer-readable storage medium stores a computer program, and when the computer program is run, the display control method according to any one of claims 1 to 7 is implemented.

10. A computer program product, wherein when the computer program product runs on an electronic device, the electronic device is enabled to implement the display control method according to any one of claims 1 to 7.
